# EUROPEAN PATENT APPLICATION

(11) **EP 1 248 189 A1**
(43) Date of publication of application: **09.10.2002**
(21) Application number: 00974893.0
(22) Date of filing: 10.11.2000
(51) Int. Cl.: G06F 9/44

(54) **PROGRAM REPRODUCING METHOD AND DEVICE, AND MEDIUM ON WHICH A PROGRAM FOR PROGRAM REPRODUCTION RECORDING**

(30) Priority: 11.11.1999 JP 32178899
(71) Applicant: Information System Development Institute, Tokyo 108-0074 (JP); The Institute of Computer Based Software Methodology and Technology, Minatu-ku, Tokyo 108-0074 (JP)
(72) Inventor: NEGORO, Fumio, Kamakura-shi, Kanagawa 248-0001 (JP)
(74) Representative: Midgley, Jonathan Lee
(86) International application number: JP0007916
(87) International publication number: WO01035213

(57) **Abstract**

A word being used in an existing program is extracted from the existing program in a form in which a definitive to which the word is related is identified. The extracted word is assigned to one or a plurality of pallets (W04, W03, W02) in dependence upon the type of definitive to which the word is related. Each statement or command in the existing program is converted to a form that is in accordance with any of a plurality of program components in one or a plurality of pallets to which a word contained in the statement or command has been assigned.

## Description

### Technical Field

This invention relates to a program reproducing method and apparatus and to a medium on which a program for program reproduction has been recorded. More particularly, the invention relates to a method and apparatus through which an existing program, which has been created by a method other than the Lyee development method, is reconstructed as a program having a structure in accordance with the Lyee development method while the functions achieved by the existing program are maintained, and to a program recording medium which allows a computer to execute this processing.

### Background Art

The Lyee (governmentaL methodologY for softwarE providencE) program development method has been registered as means for revolutionizing the conventional software creation methods and has become the focus of attention for its achievements in greatly shortening development time, reducing development labor by a wide margin, facilitating maintenance and reducing the quantity of documents.

With existing programs created by conventional software creation methods, the individuality of the individuals involved, such as system engineers and programmers, tends to manifest itself in the programs. As a consequence, there are instances where analyzing an existing program, far from being easy, is nearly impossible even if support documents are available. Even if an attempt is made to add new functions by adding new descriptions to the program, program analysis cannot be performed with ease. The task for adding new functions therefore requires a great amount of labor.

Furthermore, in a case where the operating environment of the program is to be changed (the computer machine or operating system is to be changed), the state of the art is such that no existing programs whatsoever can be utilized and the only method available is to create the programs anew.

### Disclosure of the Invention

The present invention seeks to provide a method of analyzing an existing program and regenerating this program as one which attains functions equivalent with those of the existing program based upon the results of analysis. The program reproduced is in accordance with the Lyee methodology, and the present invention is adapted in such a manner that the reproduction processing can be automated.

The method according to the present invention is a method of reproducing an existing program, which has been created by a method other than the Lyee development method, as a new program having a structure in accordance with the Lyee development method while maintaining functions accomplished by the existing program. In accordance with this method, steps include extracting a word, which is being used in the existing program, from the program in a form in which a definitive (a screen, form, file or database, etc., to which the word belongs) to which this word is related is identified, assigning the extracted word to one or a plurality of pallets in dependence upon the type of definitive to which the word is related, and converting each statement or command of the existing program to a form in accordance with any of a plurality of program components having a structure in compliance with the Lyee development method in one or a plurality of pallets to which words contained in the statements or commands have been assigned.

As will be described later in detail, a program (program components) in accordance with the Lyee methodology is one in which words are provided as the building blocks of for each of W04, W02, W03 pallets. In accordance with the present invention, because all words contained in an existing program are extracted, the program that will be reproduced will satisfy the structure of a Lyee program, which is an aggregate of (plural) programs that are based upon words. The words contained in an existing program are extracted in a form in which a definitive to which these words are related is identified, and the words are assigned to one or a plurality of pallets in dependence upon the type of definitive to which the extracted words are related. With regard to each statement or command of the existing program, these are converted upon being correlated with a plurality of program components (a program in accordance with the Lyee methodology) in one or a plurality of pallets to which words contained in the statements or commands have been assigned. Since statements or commands of the existing program are used also in the reproduced program, functions identical with those of the existing program are accomplished.

In accordance with the present invention, an existing program can be reconstructed comparatively easily and substantially automatically in the form of a Lyee program. Accordingly, it is possible for an existing program that has been loaded in an existing computer to be transplanted to a new computer comparatively easily as a new program that accomplishes the same functions. This makes it possible to deal with a change in the operating environment of the program. The program that will be reproduced will be in compliance with the Lyee methodology and therefore maintenance will be facilitated as well.

The method of reproducing a program can be expressed as follows: The method according to the present invention is a method of reproducing an existing program, which has been created by a method other than the Lyee development method, as a new program having a structure in accordance with the Lyee development method while maintaining functions accomplished by the existing program. The method includes extracting a definitive, which is controlled by an existing program, from the existing program; preparing, with regard to the extracted definitive, a plurality of program components for operating a base structure consisting of a set of W02, W04 and W03 pallets; extracting words, which are being used in the existing program, from the existing program in a form in which the definitive to which the words belong and input/output categories of the words are identified; assigning the words to one or a plurality of the pallets among the W02, W04 and W03 pallets, with regard to the definitive to which the words belong, in dependence upon the definitive to which the extracted words belong and the input/output categories of the words; and converting a statement or command that contains a word of the existing program to a form in accordance with any of a plurality of program components having a structure in compliance with the Lyee development method in a pallet related to the statement or command through the word.

An existing program generally contains a description of a definitive (screen, file, etc.) controlled by this program. A definitive controlled by the existing program is ascertained from the description regarding the definitive, and a plurality of program components (templates) for operating the base structure regarding this definitive are prepared. The base structure is a program structure in compliance with the Lyee methodology and includes a W02 pallet (program), a W04 pallet (program) and W03 pallet (program).

The type of definitive to which words used in the existing program belong and the input/output categories can be ascertained based upon the description of the existing program. On the basis of the type of definitive and the input/output categories, it is ascertained whether a word used in the existing program is a word to be assigned to the W02 pallet, W04 pallet or W03 pallet.

There are instances where an existing program uses words that do not belong to any definitive. Generally speaking, these often are words that the programmer who created the existing program has created in order to store data that is undergoing computation. A base structure (a plurality of program components for operating a base structure) for handling such words is prepared separately.

Further, an existing program may contain a description of error processing. A base structure (a plurality of program components) for dealing with such error processing is prepared separately.

In an embodiment, a statement or a command, from among statements or commands of an existing program, that is for generating data to be stored in a field represented by a word is converted to a form in accordance with a program component (homogeneity vector program), from among the plurality of program components, that is for generating the data. The statement or command is a statement or command for storing data in a so-called self word. A statement or command for generating data contained in the existing program is used in a program component (homogeneity vector program) for data generation in a pallet to which a self word belongs (i.e., to which the self word has been assigned).

If it is identified beforehand that a word used in an existing program is a self word or a given word, extraction of the above-mentioned statement from the existing program is facilitated. In general, a statement in which a self word or given word is being used can be ascertained from a specific instruction (command) included in the statement. It can be ascertained, from the stipulation (rules) in the description of the statement (the stipulation (rules) for every program language), which of two or more words contained in the statement is a self word and which is a given word.

Preferably, with regard to a statement or command that includes two or more words among statements or words of an existing program, it is determined whether the relationship between two or more pallets to which respective ones of two or more words being used in the statement or command is a relationship that satisfies a predetermined sequence. In a case where the relationship between two or more pallets does not satisfy the predetermined sequence, this statement or command is decomposed into a plurality of statements or commands and a new word is incorporated in each of the statements or commands obtained by decomposition. New words are assigned to one or a plurality of pallets among the W04, W02 and W02 pallets in such a manner that the relationship between two or more pallets, to which two or more words included in each of the statements or commands obtained by decomposition have been assigned, will satisfy the predetermined sequence.

In general, an existing program is not a program that has been created in accordance with the Lyee development method. As a consequence, there are instances where a statement or command contained in an existing program does not describe a statement or command that can exist in a program created in accordance with the Lyee development method, namely a statement or command in which two or more words are used and in which the relationship of pallets to which two or more words being used in the statement or command have been assigned, is not a relationship that satisfies a predetermined sequence (cyclic structure) required in the Lyee methodology. Such a statement or command is decomposed so as to satisfy the sequence of the cyclic structure (one statement is replaced by two or more statements). Since a statement or command that satisfies the sequence of the cyclic structure remains in the existing program, the conversion of each statement or command to the form of any program component is facilitated.

According to another embodiment, from among statements or commands of an existing program, a statement or command which executes physical input/output processing with regard to a definitive is adopted as part of a program component (tense control function program; main program), which is for performing overall control of pallets, from among the above-mentioned plurality of program components.

Preferably, a process route diagram, which represents the flow of processing of the existing program, is created from the existing program by one base structure or by a combination of a plurality of base structures. By creating the process route diagram in advance, positioning in a program that complies with the Lyee development method can be ascertained with ease in regard to each statement and word of the existing program.

For example, in a case where a route leading to two or more different base structures or a route leading to quit processing is expressed in the process route diagram, a conditional statement or conditional command representing a branch condition at a branch point of the route is extracted from the existing program. The extracted conditional statement or conditional command is converted to a form in compliance with a program component (routing action vector program) for route determination among a plurality of program components of a pallet from which the branch point originates. One positioning of a conditional statement or conditional command in a program that complies with the Lyee development method is ascertained.

A conditional statement or conditional command used in an existing program includes, in addition to one positioned as a branch condition of a route in a program compliant with the Lyee methodology, one positioned as a condition (output condition) in a case where data is output to a display screen and as a condition (input condition) in a case where data is read in from a file or the like, and one positioned as a condition in a case where the results of processing are made to differ by predetermined conditions.

A conditional statement or conditional command representing a data input condition or a data output condition is searched for based upon the description of an existing program and, in a case where a conditional statement or conditional command representing a data input condition or a data output condition has been extracted, the extracted conditional statement or conditional command is converted to a form that is in accordance with a program component (input/output vector program) for input or output operation from among a plurality of program components in a pallet in which the data input condition or data output condition acts.

A conditional statement or conditional command representing a decision condition of an equivalent word is searched for based upon the description of an existing program and, in a case where a conditional statement or conditional command representing a decision condition of an equivalent word has been extracted, the extracted conditional statement or conditional command is converted to a form that is in accordance with a program component (an acceptance condition of a homogeneity vector program) from among program components in a pallet to which the equivalent word has been assigned.

The present invention provides also a program reproducing apparatus for reproducing an existing program as a new program (Lyee program) having a structure in accordance with the Lyee development method while maintaining functions accomplished by the existing program.

The program reproducing apparatus according to the present invention has first storage means for storing a plurality of program components which construct a Lyee program; second storage means for storing tense control function information, base structure information, pallet information, definitive information, route information and command information obtained from a process route diagram created based upon an existing program; third storage means for storing an existing program applied thereto; first assignment means for assigning a word, which is being used in the existing program that has been stored in the third storage means, to one or a plurality of pallets among a W04 pallet, W02 pallet and W03 pallet, which are included in a base structure to which the word is related, based upon the tense control function information, base structure information, pallet information and definitive information that has been stored in the second storage means; and conversion means which, on the basis of the route information and command information that has been stored in the second storage means, is for converting each statement or command of the existing program that has been stored in the third storage means to a form in accordance with any of the plurality of program components, which have been stored in the first storage means, in the one or plurality of pallets to which a word included in the statement or command has been assigned.

In accordance with the present invention, a word being used in an existing program is assigned to one or a plurality of pallets among a W04 pallet, W02 pallet and W03 pallet based upon various information (tense control function information, base structure information, pallet information and definitive information) obtained from a process route diagram created on the basis of the existing program. As a result, whether a program compliant with the Lyee methodology should be created or not can readily be ascertained in regard to any word. Whether a statement or command in an existing program should be converted to a form in accordance with any of a plurality of program components is ascertained from route information and command information.

The program reproducing apparatus has read-in means for reading in a statement or command of an existing program. The existing program statement or command read in by the read-in means is used in a program component (template) that is in compliance with the Lyee methodology.

Further, the present invention provides a medium on which a program for controlling the above-described program reproducing apparatus has been recorded, particularly a medium on which has been recorded a program (an assignment program) for allowing the program reproducing apparatus to execute processing for assigning a word, which is being used in an existing program, to a pallet, and a medium on which has been recorded a program (a conversion program) for allowing the program reproducing apparatus to execute processing for converting a statement or command of an existing program to a form in accordance with any of a plurality of program components that are based upon the Lyee methodology. The program recording medium includes a magnetic disk, optical disk, magneto-optic disk, magnetic tape or semiconductor memory, etc.

### Brief Description of the Drawings

Fig. 1 is a block diagram illustrating the general form of a software model in accordance with the Lyee methodology;
Fig. 2 illustrates an example of a process route diagram of an on-line process;
Fig. 3 illustrates an example of a process route diagram of a batch process;
Fig. 4 illustrates an example of a process route diagram together with a process route diagram of an on-line process T0;
Fig. 5 illustrates part of a process route diagram regarding general software;
Fig. 6 is a conceptual view showing the handling of words (the relationship among words) in the Lyee methodology;
Fig. 7 illustrates types of programs, which are required for every base structure, and the positioning thereof;
Fig. 8 is a flowchart illustrating the flow of processing of a W04 pallet function program;
Fig. 9 is a flowchart illustrating the flow of processing of a W02 pallet function program;
Fig. 10 is a flowchart illustrating the flow of processing of a W02 pallet function program;
Fig. 11 is a flowchart illustrating the flow of processing of a duplicate vector program (template);
Fig. 12 is a flowchart illustrating the flow of processing of a homogeneity vector program (W04) (template);
Fig. 13 is a flowchart illustrating the flow of processing of an output vector program (template);
Fig. 14 is a flowchart illustrating the flow of processing of routing action vector program (template);
Fig. 15 is a flowchart illustrating the flow of processing of a structural vector program (template);
Fig. 16 is a flowchart illustrating the flow of processing of a homogeneity vector program (W02) (template);
Fig. 17 is a flowchart illustrating the flow of processing of a homogeneity vector program (W02G) (template);
Fig. 18 shows a specific program example of a homogeneity vector program (W02) (template);
Fig. 19 illustrates the overall processing of program reproducing processing;
Fig. 20 is a block diagram illustrating the structure of a program reproducing processing apparatus;
Fig. 21 shows a specific example of a conventional program;
Fig. 22 shows an example of a product ordering screen;
Fig. 23 shows an example of a product table;
Fig. 24 is a flowchart illustrating the flow of processing of the conventional program shown in Fig. 21;
Fig. 25 is a flowchart illustrating the flow of processing of the conventional program shown in Fig. 21;
Fig. 26 is a flowchart illustrating the detailed flow of formatting processing;
Fig. 27 shows an example of a command table (the entirety thereof);
Fig. 28 shows an example of a command table (classified by program);
Fig. 29 illustrates a process route diagram representing the processing of the conventional program shown in Fig. 21;
Fig. 30 shows an example of a process route diagram information table;
Fig. 31 is a flowchart illustrating the detailed flow of primary coordinate decision processing;
Fig. 32 shows an example of a Lyee belt after primary coordinate decision processing;
Fig. 33 is a flowchart illustrating the detailed flow of standardizing processing;
Fig. 34 is a flowchart illustrating the detailed flow of secondary coordinate decision processing;
Fig. 35 shows an example of a Lyee belt after secondary coordinate decision processing;
Fig. 36 is a flowchart illustrating the detailed flow of statement expansion processing;
Fig. 37 shows an example of a command sequence table;
Fig. 38 is a flowchart illustrating the detailed flow of processing for analyzing an IF statement;
Fig. 39 is a flowchart illustrating the detailed flow of processing for analyzing an IF statement;
Fig. 40 is a flowchart illustrating the detailed flow of processing for analyzing an IF statement;
Fig. 41 is a flowchart illustrating the specifics of Lyee ALL processing;
Fig. 42 shows an example of copy statement expansion processing;
Fig. 43 shows another example of copy statement expansion processing;
Fig. 44 shows yet another example of copy statement expansion processing;
Fig. 45 shows an example subroutine expansion processing;
Fig. 46 shows an example of cleaning processing;

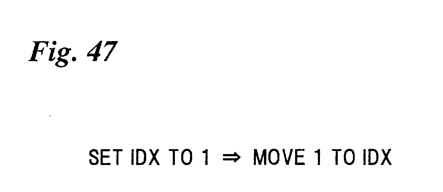

Fig. 47 an example of rule revision processing;
Fig. 48 shows an example of one-line conversion processing;
Fig. 49 shows another example of one-line conversion processing; and
Fig. 50 illustrates an example of processing for conversion to a simple hierarchical structure.

### Best Mode for Carrying Out the Invention

### 1. Software model in accordance with the Lyee methodology

The basic role of information processing that a person requires of a computer is that the information to be obtained be displayed on the display screen of a display device, printed out by a printer or stored in a storage device. The information to be obtained (this includes absence of information) is output by the computer. With a software model in accordance with the Lyee methodology, the output section (the software section relating to the output) is taken as the starting point. The section of the software that relates to output shall be referred to as a "W04 pallet" ("pallet" signifies something used to convey meaning).

New information for information processing to be executed next is input to a computer in accordance with the operation of the computer (e.g., display of results of information processing on a display screen) controlled by the section of the software relating to the output. For example, if information that has been output by the section (W04 pallet) of the software relating to output is output information (a numerical value, etc., displayed on the display screen) that a person can recognize, the person recognizes the meaning of this information, makes a decision and acts. The action taken by the person takes the form of an input to the computer. The section of the software relating to input shall be referred to as a "W02 pallet".

The computer responds to the input by executing predetermined processing. This processing is for generating information to be obtained, which information is to be output by the above-mentioned W04 pallet. The section of the software that causes the computer to operate in response to an input shall be referred to as a "W03 pallet".

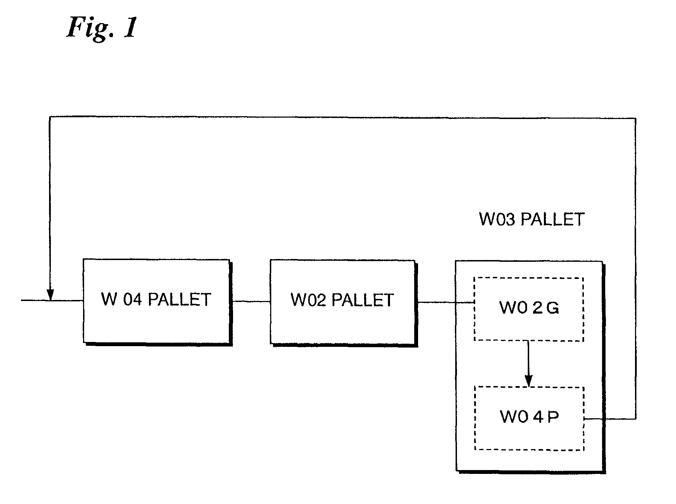

The computer outputs the results of processing executed in response to an input. In other words, the W04 pallet is placed after the W03 pallet in the sequence. In accordance with the Lyee methodology, the software model basically has a cyclic structure that starts from the W04 pallet, traverses the W02 pallet and W03 pallet and arrives at the W04 pallet again. The general form of this cyclic structural model is as shown in Fig. 1.

In the cyclic structural model (referred to as a "base structure" below) shown in Fig. 1, the W03 pallet includes W02G and W04P, which are sub-pallets. The W02G sub-pallet is a software section for executing processing such as processing that loads data which moves from the W02 pallet to the W03 pallet. The W04P sub-pallet is a software section for creating new data by prescribed data processing. With the Lyee software model, basically information accepted by the W02 pallet is loaded into the W02G sub-pallet of the W03 pallet. Predetermined processing (the four arithmetical operations) is executed in the W04P sub-pallet. The information of the W04P sub-pallet moves to the W04 pallet and is output by the W04 pallet (displayed on a display screen or stored in a file or database, etc.).

In the software model in accordance with the Lyee methodology, the base structure comprising the W04 pallet, W02 pallet and W03 pallet is divided into the following three classes depending upon the type of data output by the W04 pallet:

The first is for a case where the data output by the W04 pallet involves participation by a person (e.g., as by being output of the display screen of a display device). The base structure that includes such a W04 pallet shall be referred to generally as an "on-line process T0". A W04 pallet, W02 pallet and W03 pallet in the on-line process T0 shall be referred to as a T0W04 pallet, T0W02 pallet and T0W03 pallet, respectively. The T0W03 pallet includes a T0W02G sub-pallet and a T0W04P sub-pallet.

The second is for a case where the data output by the W04 pallet does not involve participation by a person (e.g., as by being output to a storage medium such as a file). The base structure that includes such a W04 pallet shall be referred to generally as a "batch process T1". A W04 pallet, W02 pallet and W03 pallet in the batch process T1 shall be referred to as a T1W04 pallet, T1W02 pallet and T1W03 pallet, respectively. The T1W03 pallet includes a T1W02G sub-pallet and a T1W04P sub-pallet.

The third is for a case where the data output by the W04 pallet is not data that is to be eventually obtained (e.g., a case where prescribed data is created in advance as pre-processing in order to create data output to the display screen by the T0W04 pallet). The base structure that includes such a W04 pallet shall be referred to generally as "K" (Knowledge). In general, when software in accordance with the Lyee methodology is created from the beginning, the base structure of K does not appear (the software can be created in such a manner that this base structure will not appear). When an existing (conventional) program is reconstructed as a program in accordance with the Lyee methodology, the K base structure is required in order to apply the conventional program structure to the Lyee program structure. The K base structure is positioned as a software section for handling words created by the programmer of the conventional program or as a software section for executing error processing.

A W04 pallet, W02 pallet and W03 pallet in K shall be referred to as a K-W04 pallet, K-W02 pallet and K-W03 pallet, respectively. The K-W03 pallet includes a K-W02G sub-pallet and a K-W04P sub-pallet.

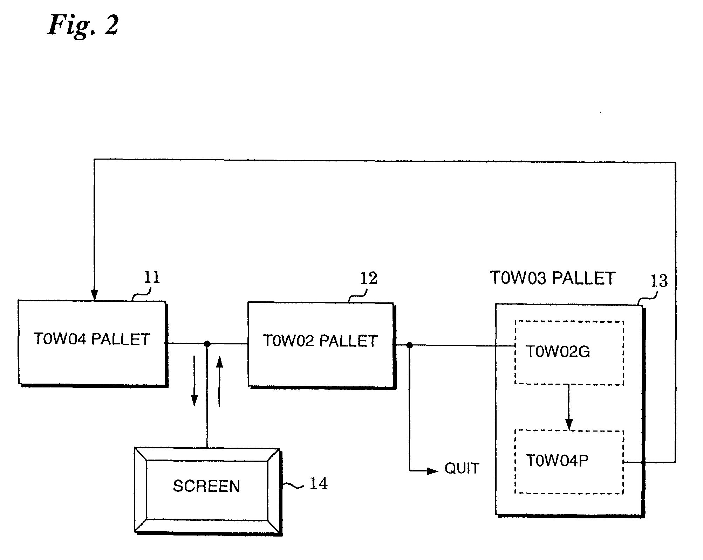

Software for executing prescribed processing can be expressed visually using the base structure comprising the W04, W02 and W03 pallets. A diagram which represents the processing flow of software by a base structure shall be referred to as a "process route diagram". An example of a process route diagram that includes the on-line process T0 is as shown in Fig. 2. This process route diagram includes a base structure (cyclic structure) composed of a T0W04 pallet 11, a T0W02 pallet 12 and a T0W03 pallet 13.

A block 14 representing the display screen of a display device is situated between the T0W04 pallet 11 and T0W02 pallet 12. Characters, numerals and the like are displayed on the display screen 14 by the T0W04 pallet 11.

While observing the characters and numerals, etc., displayed on the display screen 14, a person uses an input unit to enter characters and numerals, etc. The entered characters and numerals are handled by the T0W02 pallet 12.

Prescribed processing is executed in the T0W03 pallet 13 using the character and numerals, etc., input to the T0W02 pallet 12. That is, the T0W02G sub-pallet (a duplicate vector program, described later) of the T0W03 pallet 13 accepts the data representing the characters and numerals from the T0W02 pallet 12. Prescribed processing (the four arithmetical operations, etc.) is executed using data, etc., of the T0W02 pallet in the T0W04P pallet. Data (results of processing) that has undergone prescribed processing is applied to the T0W04 pallet 11. The T0W04 pallet 11 accepts the data (results of processing) of the T0W04P sub-pallet and displays the data on the display screen 14.

The route extending from the T0W02 pallet 12 is divided into two routes. One route leads to the T0W03 pallet 13 and the other leads to quit processing. For example, when a "QUIT" button is being displayed on the display screen 14 (i.e., when a program for displaying such a display screen is created), such a process route diagram is drawn. If an enter key on the input device of the computer is pressed, the route directed toward the T0W03 pallet 13 is selected. If the "QUIT" button is pressed, the route directed to quit processing is selected.

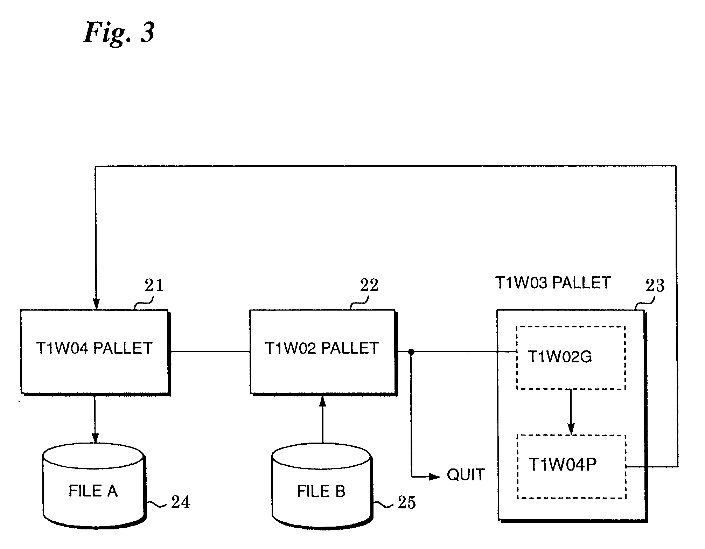

An example of a process route diagram that includes the batch process T1 is shown in Fig. 3. This process route diagram includes a base structure (cyclic structure) composed of a T1W04 pallet 21, a T1W02 pallet 22 and a T1W03 pallet 23.

The T1W02 pallet 22 reads in data that has been stored in a file B 25. The data that has been read in moves to the T1W03 pallet 23 (this is data movement from the T1W02 pallet 22 to a T1W02G sub-pallet of the T1W03 pallet 23). Prescribed processing (acquisition of data of the T1W02G sub-pallet by a T1W04P sub-pallet and prescribed processing in the T1W04P sub-pallet) is executed in the T1W03 pallet 23. The T1W04 pallet 21 acquires the results of this processing (this is data movement from the T1W04P sub-pallet to the T1W04 pallet 21). In the T1W04 pallet 21 the results of processing are recorded in a file A 24.

The route extending from the T1W02 pallet 22 is divided into two routes. One route leads to the T1W03 pallet 23 and the other leads to quit processing. For example, when the T1W03 pallet 23 executes prescribed processing successively with regard to a plurality of records included in the file B 25 and read-out of all records and prescribed processing are completed, such a process route diagram is drawn if the route directed toward the T0W03 pallet 13 is selected.

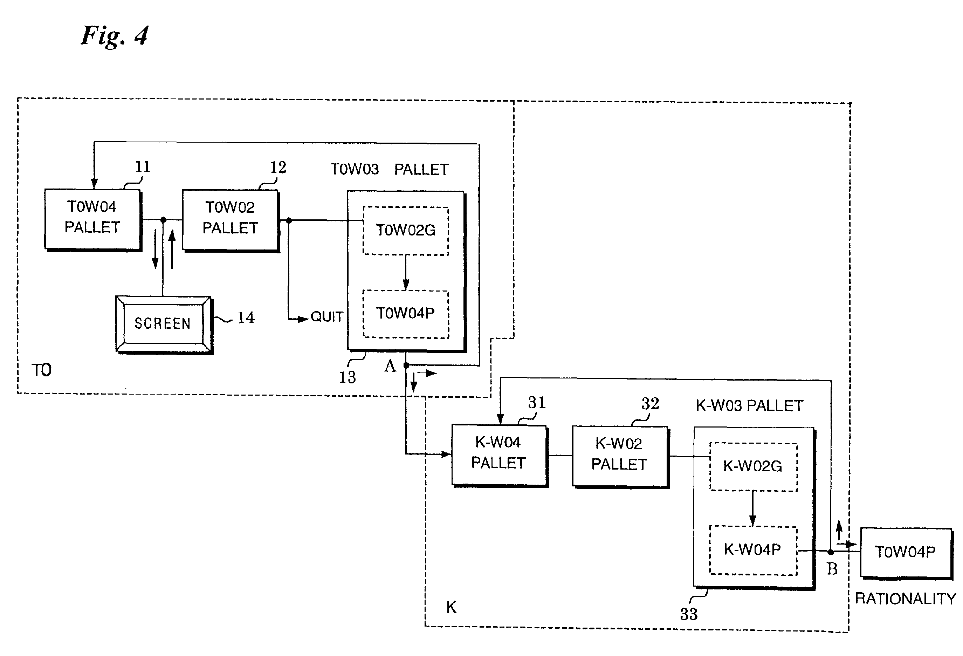

An example of a process route diagram that includes K is shown in Fig. 4. The base structure (cyclic structure) of K is a base structure for a case where data output by the W04 pallet is not data to be eventually obtained. Since it is necessary to make a connection to an output of data that is to be eventually obtained (an output owing to processing by the T0W04 pallet or T1W04 pallet), at least one of the process route diagram of on-line process T0 or process route diagram of batch process T1 is always drawn in the process route diagram that includes K. The process route diagram (identical with that of Fig. 2) of on-line process T0 is drawn together with the process route diagram of K in the process route diagram illustrated in Fig. 4. The part that is the process route diagram of K and the part that is the process route diagram of on-line process T0 are each indicated as being enclosed by dashed lines.

The process route diagram of K is a base structure (cyclic structure) composed of a K-W04 pallet 31, a K-W02 pallet 32 and a K-W03 pallet 33.

The route extending from the T0W03 pallet 13 (T0W04P sub-pallet of T0W03 pallet 13) branches at branch point A into a route that returns to the T0W04 pallet 11 and a route that leads to the K-W04 pallet 31. Whether to return to the T0W04 pallet 11 or advance to the K-W04 pallet 31 is decided by a decision (route decision) in the T0W04P sub-pallet of the T0W03 pallet 13.

Similarly, the route extending from the K-W03 pallet 33 (K-W04P sub-pallet of the K-W03 pallet 33) branches at a branch point B into a route that returns to the K-W04 pallet 31 and a route directed to the T0W0P4 sub-pallet (meaning the T0W04P sub-pallet of the T0W03 pallet 13). Whether to proceed to the K-W04 pallet 31 or proceed to the T0W04P sub-pallet is decided by a decision in the K-W04P sub-pallet of the K-W03 pallet 33. The connection of a base structure of a different type between T0 and K and between T1 and K, etc., shall be referred to particularly as "rationality" in the Lyee methodology.

If the route that advances to the K-W04 pallet 31 is selected at branch point A, then the flow proceeds from the K-W04 pallet 31 to the K-W02 pallet 32 and K-W03 pallet 33, where prescribed processing (the four arithmetical operations) is performed.

Though Fig. 4 illustrates the connection (unit team) between the base structure of the on-line process T0 and the base structure of K, a process route diagram can be drawn in similar fashion for the connection between the base structure of the batch process T1 and the base structure of K.

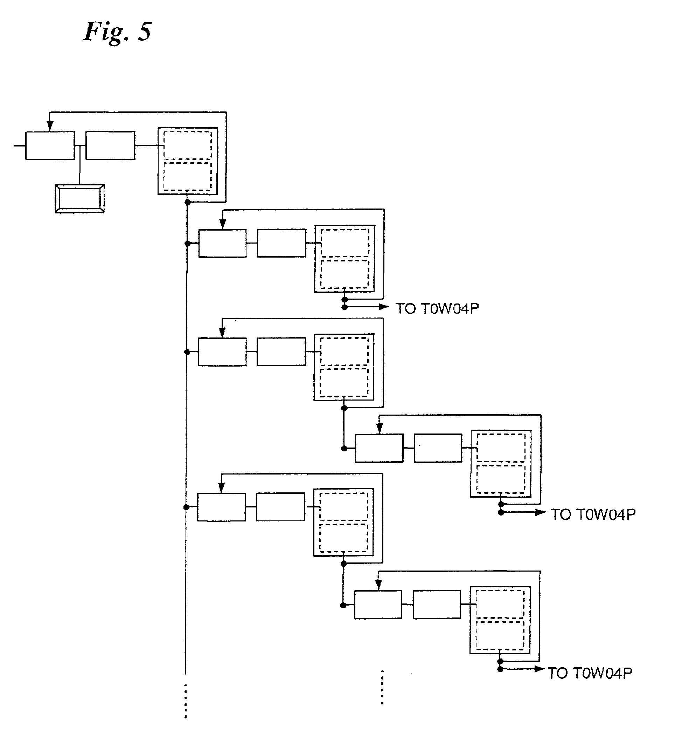

Fig. 5 illustrates part of a general process route diagram regarding software for executing prescribed processing. If a process route diagram is drawn regarding software that causes a computer to execute prescribed processing, generally a process route diagram that includes a number of base structures (the base structure of the on-line process T0, the base structure of the batch process T1 and the base structure of K) is drawn as shown in Fig. 5.

The unit of information processed by a Lyee software model is an item displayed on a display screen or a data item that appears in a file. These items are positioned as data fields in computer processing. In the Lyee methodology, a state in which a value of some kind has been set in a data field is referred to as a "significant state" ("significance"). Processing for setting some value in a data field is referred to as "acceptance processing". A program description that stipulates a data field (a unit that makes it possible to judge whether there is significance or not, the smallest, most basic unit for managing data handled by software) in which data of some kind is set, or a data field in which data is to be set, shall be referred to as a "word". Ordinarily, a word (data field) is associated with a screen, a form, a file, a database or a telegram (a word on a screen, a word in a form, a word in a file, etc.). A screen, form, file, database or message, etc., to which a word belongs shall be referred to generally as a "definitive". Generally speaking, a plurality of words belong to a definitive. Further, definitives are classified broadly into a definitive used in data input (e.g., a database in which data to be loaded into a computer has been stored) and a definitive used in data output (e.g., a screen for displaying the results of processing). A definitive used in data input shall be referred to as an "input definitive", and a definitive used in data output shall be referred to as an "output definitive". A definitive used in both data input and output shall be referred to as an "input/output definitive". A word belonging to an input definitive shall be referred to as an "input word", a word belonging to an output definitive shall be referred to as an "output word", and a word belonging to an input/output definitive shall be referred to as an "input/output word".

With the Lyee software model, a program for each word is created using the above-mentioned words as the foundation. More specifically, whether all words dealt with in the Lyee software model are words to be dealt with by any of the W04, W02, W03 pallets in the aforementioned T0, T1 or K is decided in advance (placement of words in the pallets and decision of coordinates).

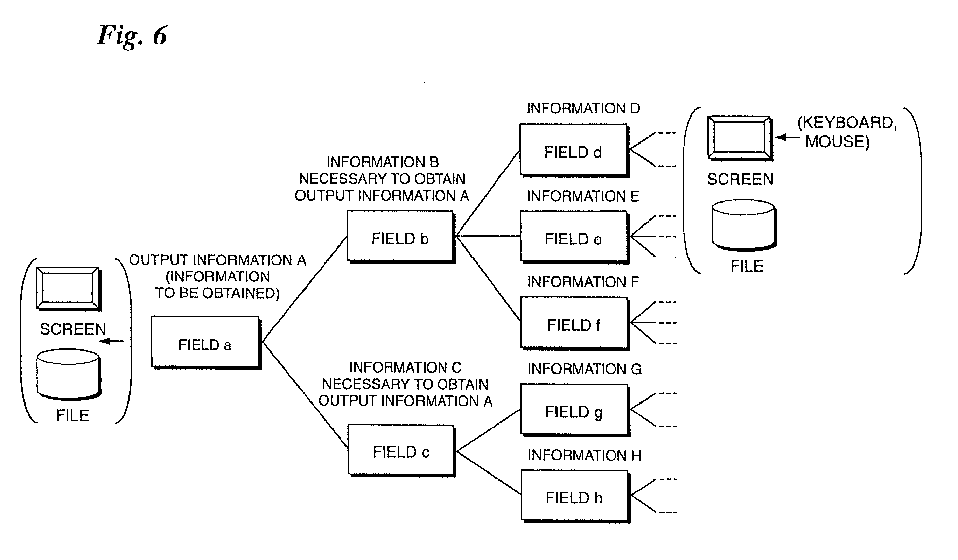

If it is determined that one word has significance, it is possible to judge significance with regard to another word that utilizes the data stored in the first-mentioned word. In other words, by creating programs on a per-word basis, a determination on a per-word basis can be made, i.e., it is possible to make a determination as to whether the significance of a word in which information to be eventually obtained will be stored has been satisfied (whether data has been stored in a data field), and it is possible to make a determination as to whether the significance of another word required in order to obtain information to be eventually obtained has been satisfied. An example of such handling of words (the relationship among words) in the Lyee methodology is as illustrated schematically in Fig. 6.

Assume that information B and C is necessary in order to obtain information (output information A) that is to be eventually obtained (i.e., in order to store data in a data field a in which data representing information A is to be stored). Assume that information D, E and F is necessary in order to obtain information B, and the information G and H is necessary in order to obtain information C. If such a relationship exists among a plurality of words (data fields), whether the output information A eventually necessary will be obtained can be determined by deciding whether significance exists for each word. With the Lyee software model, a program for every word is thus prepared.

For example, assume that the output information A is the result of adding the information B and C (A = B+C). In other words, if the information B and C is obtained, then the output information A can be obtained by utilizing this obtained information (information B and information C). In a case where A = B+C has been determined, the data field a (word a) in which the information A is to be stored shall be referred to as a "self word" in the Lyee methodology. Data field b and data field c (words b and c) in which are stored information (here information B and C) used to store data (information A) in word a (i.e., to generate the information A) shall be referred to as "given words". There are occasions where data to be stored in a self word and data to be stored in a given word differ (e.g., the case described above) and occasions where they are the same (cases where data is moved).

In accordance with the Lyee methodology, as described above, the base structure (cyclic structure) composed of the W04 pallet, W02 pallet and W03 pallet is the fundamental software structure of a Lyee program. Various programs for implementing this software structure are prepared. Types of programs serving as elements of a program (referred to below as a "Lyee program") created in accordance with the Lyee methodology will described.

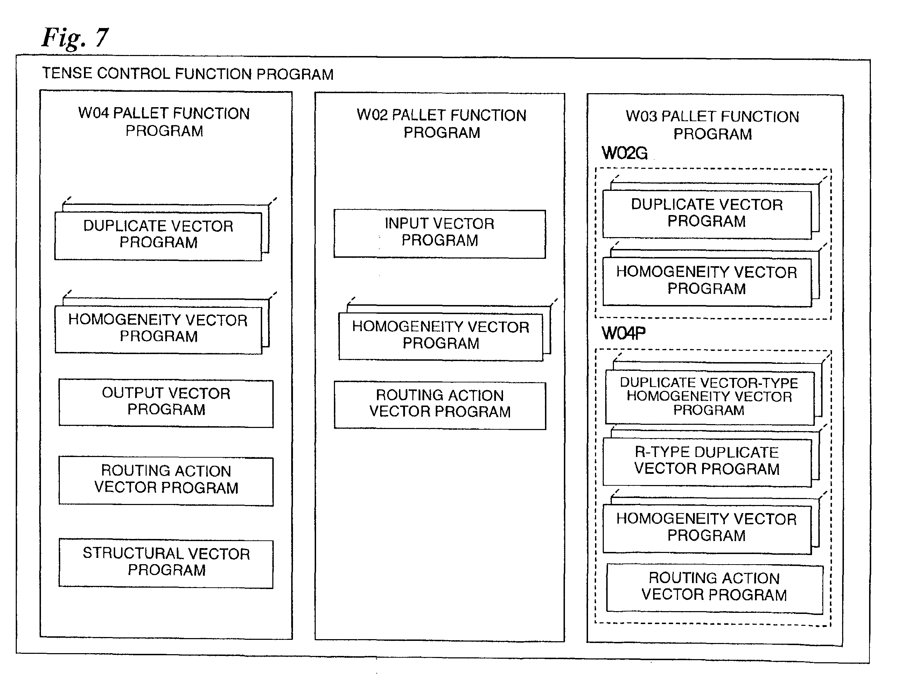

Fig. 7 illustrates types of programs, which are required for every base structure, and the positioning of these programs. Basically, these programs are prepared for each of the base structures, namely the base structure of on-line process T0, the base structure of batch process T1 and the base structure of K. In the description of Fig. 7, the T0, T1 or K distinction is not shown.

The base structure (cyclic structure) is controlled by a tense control function program. Specifically, a tense control function program is a program that causes the pallets (W04, W02 and W03 pallets) (pallet function programs, described later) constituting the base structure to operate in turn. For instance, taking a COBOL program as an example, the tense control function program is positioned as a main program, and the W04 pallet (function program), W02 pallet (function program) and W03 pallet (function program) are positioned as subroutine programs. Basically, a tense control function program is prepared for every base structure. The tense control function program also executes processing for starting up a tense control function program of another base structure under prescribed conditions, as well as processing for operating a physical definitive.

What are controlled (called) by the tense control function program are the W04 pallet function program, the W02 pallet function program and the W03 pallet function program. The W04 pallet function program, W02 pallet function program and W03 pallet function program are programs each of which is for controlling a plurality of programs (vector programs), which will be described next. Various vector programs, described next, are placed at positions referred to as programs called by the W04 pallet function program, W02 pallet function program and W03 pallet function program by a PERFORM statement or CALL statement, taking a COBOL program as an example.

In a Lyee program, as mentioned earlier, whether a word (data field) is a word (is associated with a word) to be dealt with by a W03 pallet function program (referred to below as a "W03 pallet"), a word to be dealt with by a W04 pallet function program (referred to below as a "W04 pallet") or a word to be dealt with by the W02G sub-pallet or W04P sub-pallet portion of a W03 pallet function program (referred to below as a W03 pallet) is decided in advance (assignment of words to pallets and decision of coordinates). In the description that follows, these words shall be referred to as a "W04 pallet word", "W02 pallet word", "W02G sub-pallet word" and "W04P sub-pallet word", respectively.

### (1) W04 pallet function program (W04 pallet)

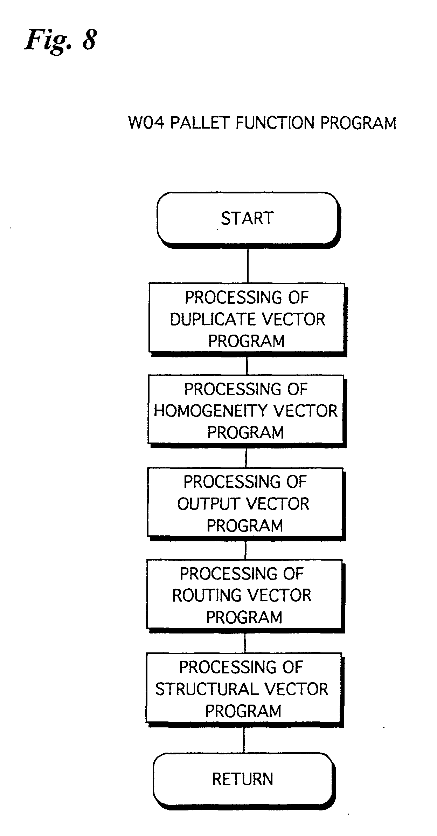

This is a program for controlling, in turn, a duplicate vector program, homogeneity vector program, output vector program, routing action vector program and structural vector program. A W04 pallet function program is prepared for each (screen A, screen B, etc.) output definitive. The flow of processing of the W04 pallet function program (W04 pallet) is illustrated in Fig. 8. The processing of each individual vector program controlled by the W04 pallet will now be described.

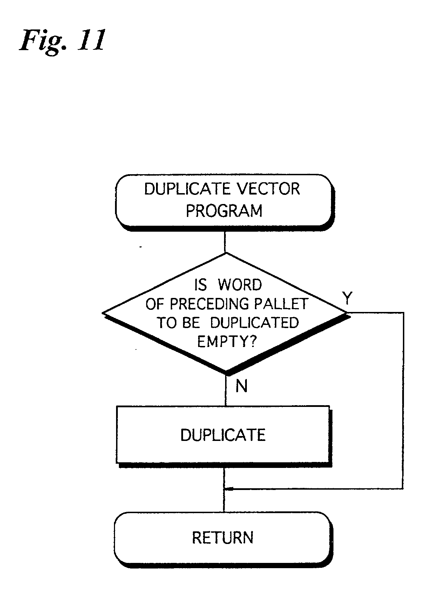

Duplicate vector program (W04): The flow of processing is illustrated in Fig. 11. The duplicate vector program determines whether each word (W04P sub-pallet word) that belongs to (has been assigned to) the preceding pallet (the W04P sub-pallet since this precedes the W04 pallet) is empty [whether significance has been established (whether data has been stored in the data field)]. If significance has been established with regard to the W04P sub-pallet (if data has been stored in the data field), the data that has been stored in this word (data field) is duplicated (moved) from the W04P sub-pallet to the corresponding word (data field) of the W04 pallet. A state in which data has not been stored in a word is referred to as "emptiness". If the W04P sub-pallet word is "empty", then processing is exited directly.

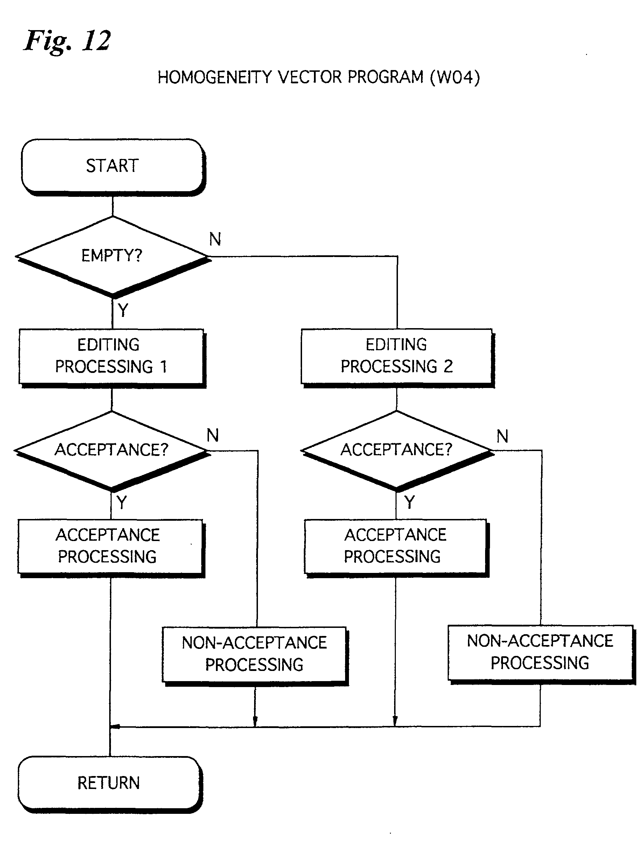

Homogeneity vector program (W04): The flow of processing is illustrated in Fig. 12. This is a program for performing output editing with regard to each of the W04 pallet words. For example, in a case where data to be output has been stored in a word (data field) by code information, this is a program for converting this code information to a language and outputting the language on a display screen. In a case where a numerical value is to be output to a form, this is a program for executing editing processing, i.e., for outputting a numerical value while adding a comma (,) every three digits (e.g., 1,000). Editing processing (a program description for editing processing) is positioned at "Editing Processing 1", "Editing Processing 2". Editing processing can be made different depending upon whether a W04 pallet word is empty (data has not been stored in the data field) or not empty (data has been stored in the data field). An "ACCEPTANCE?" decision is for determining whether editing processing can be executed or not. If editing processing can be executed, then control proceeds to "ACCEPTANCE PROCESSING" (e.g., processing continues as is). If editing processing cannot be executed, then control proceeds to "NON-ACCEPTANCE PROCESSING" (e.g., an error flag is set).

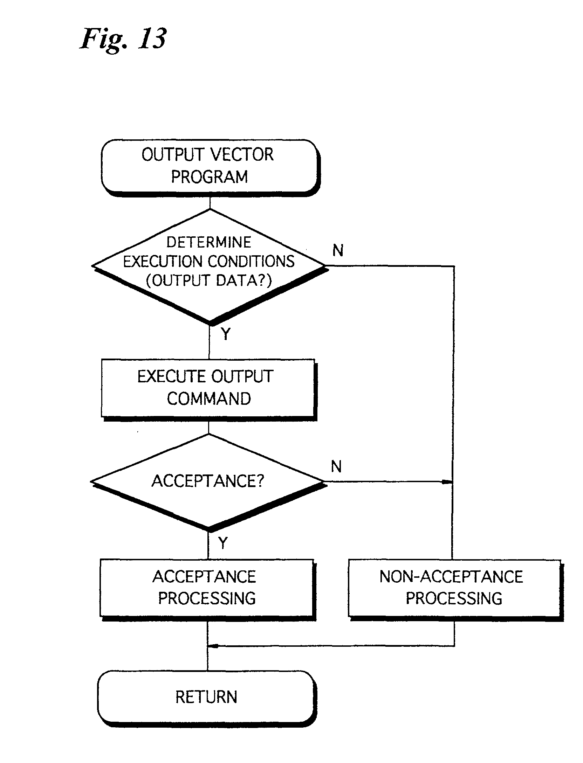

Output vector program: The flow of processing is illustrated in Fig. 13. This is a program prepared for every output definitive, i.e., screen, form or file. A determination as to whether data is output to an output definitive (as to whether data that has been stored in a word is to be output to a display screen) is made and processing based upon this determination (displaying data on the display screen if the data is data to be output, refraining from presenting a screen display if the data is not data to be output, etc.) is executed.

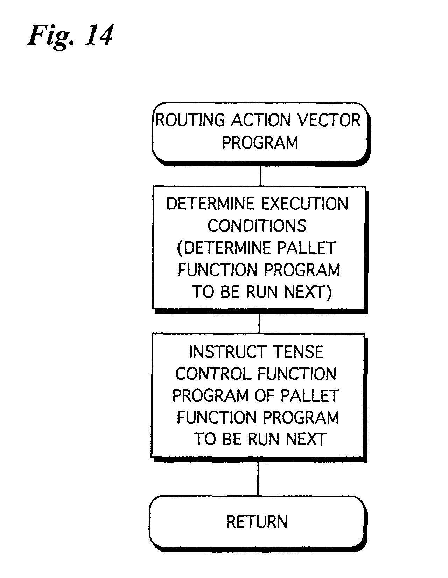

Routing action vector program (W04): The flow of processing is illustrated in Fig. 14. As mentioned earlier, that are instances (branching) where a Lyee program is created in such a manner that processing by one pallet will shift to processing by any pallet of two or more other pallets. A routing action vector program (W04) is a program which stipulates to which W02 pallet processing control should proceed depending upon which condition. For example, if a route advancing from the W04 pallet to the W02 pallet branches in a process route diagram, routing action vector programs, the number of which corresponds to the number of branches, are prepared. A command is supplied from the routing action vector program to a tense control function program and, on the basis of this command, the tense control function program activates the W02 pallet that is to be operated next.

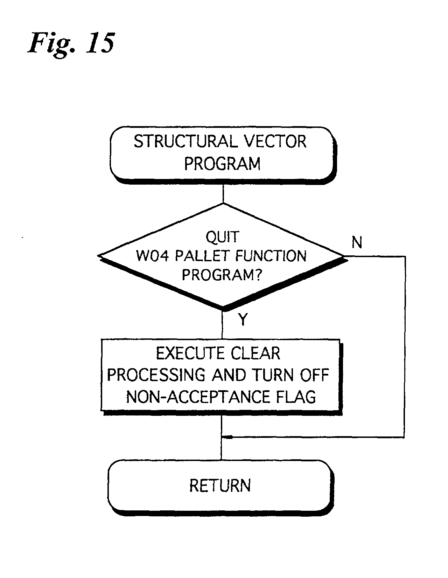

Structural vector program: The flow of processing is illustrated in Fig. 15. This is a program which, in response to execution of output processing by the above-described output vector program regarding all W04 pallet words, subsequently executes processing for clearing data of a W04 pallet word and W04G sub-pallet word (data field) and processing for turning off a flag set in a case where non-acceptance processing has been executed.

Thus, as described above, a Lyee program basically is a set of programs created using words as units. The above-mentioned duplicate vector program, homogeneity vector program (W02) and output vector program are created with regard to a word (W04 pallet word) belonging to (assigned to) a W04 pallet. A structural vector program is created with regard to a definitive (here an output definitive) to which a word that has been assigned to a W04 pallet belongs. A routing action vector is such that the number thereof changes depending upon the number of branches in a route extending from a W04 pallet that constructs a base structure (cyclic structure), as described above.

### (2) W02 pallet function program (W02 pallet)

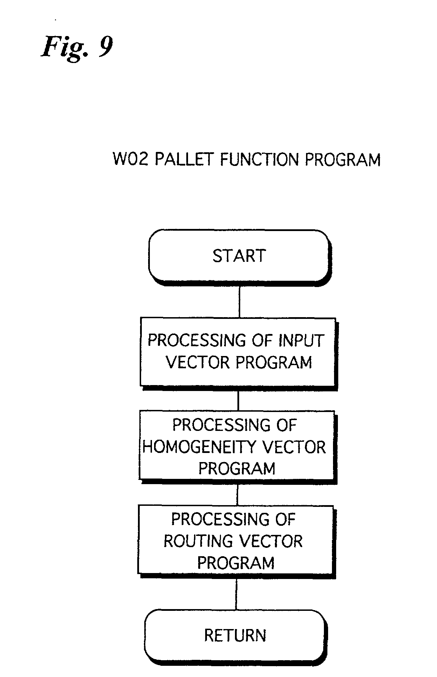

This program controls, in turn, an input vector program, homogeneity vector program and routing action vector program. A W02 pallet function program is prepared for each input definitive. The flow of processing of the W02 pallet function program (W02 pallet) is illustrated in Fig. 9. The processing of each individual vector program controlled by the W02 pallet will now be described.

Input vector program: This is a program prepared for every input definitive, i.e., screen or file. A determination is made as to whether data is to be read in from an input definitive (whether data, etc., is to be read in from a database) and processing (reading data, which is to be read in, out of a file and storing the data in a prescribed word that has been assigned to the W02 pallet) based upon the results of the processing is executed. The flow of processing is similar to that of the output vector program illustrated in Fig. 13.

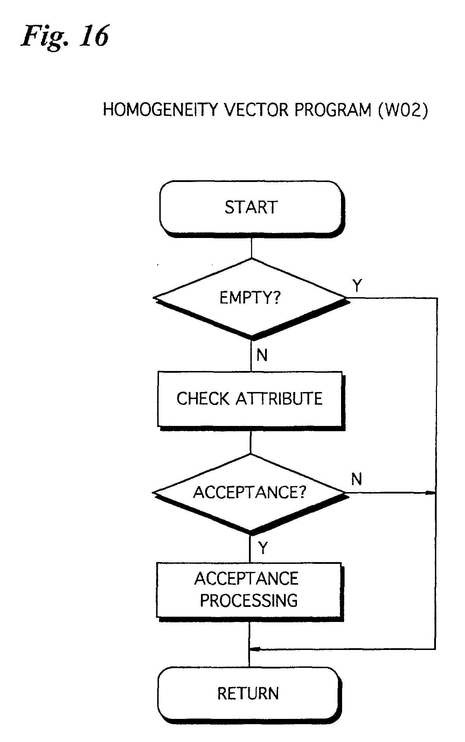

Homogeneity vector program (W02): The flow of processing is illustrated in Fig. 16. This is a program for checking the attribute (type) of data that has been stored in a word assigned to the W02 pallet. For example, processing (attribute check) is executed by the homogeneity vector program (W02) for a case where character data has been entered by the user despite the fact that the type of data to be stored in a prescribed word (data field, etc., in which data entered by the user using an input unit is to be stored) has been defined as being a numerical value. The number of homogeneity vector programs (W02) prepared is equal to the number of W02 pallet words.

Routing action vector program (W02): This is a program for stipulating to which W03 pallet processing control should proceed depending upon which condition in a case where a route advancing from the W02 pallet to the W03 pallet branches. The number of routing action vector programs prepared conforms to the number of branches. The flow of processing is as indicated by the processing illustrated in Fig. 14.

### (3) W03 pallet function program (W03 pallet)

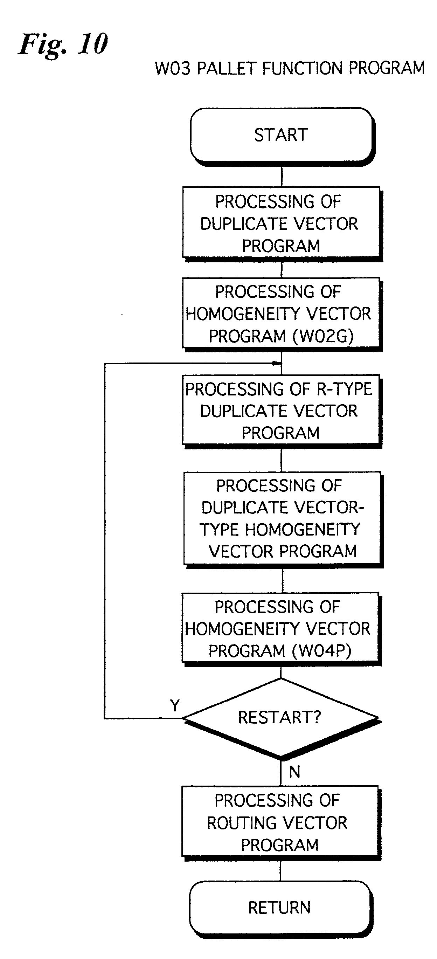

This program basically controls, in turn, a duplicate vector program, homogeneity vector program, duplicate vector-type homogeneity vector program, R-type duplicate vector program, homogeneity vector program and routing action vector program. One W03 pallet function program is prepared for one system. The processing of the W03 pallet function program (W03 pallet) is illustrated in Fig. 10. The processing of each individual vector program controlled by the W03 pallet will now be described.

Duplicate vector program (W02G): This is a program for determining whether significance has been established with regard to each word that has been assigned to a W02 pallet (whether data has been stored in a data field). If significance has been established, the data that has been stored in this word (data field) is duplicated (moved) from the W02 pallet to a word (data field) of the W02G sub-pallet. The number of duplicate vector programs prepared is the same as the number of W02 pallet words. The processing is similar to that of Fig. 11.

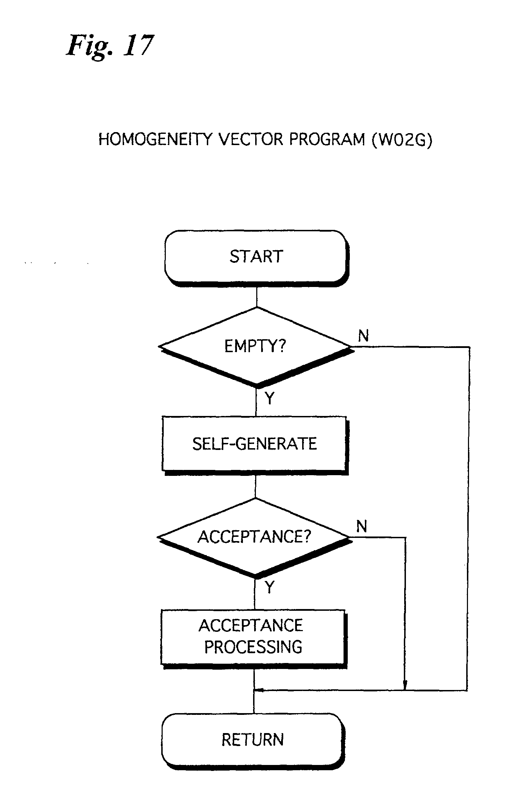

Homogeneity vector program (W02G): The content of this processing is illustrated in Fig. 17. Homogeneity vector programs the number of which is the same as the number of words that have been assigned to a W02G sub-pallet are prepared. The homogeneity vector program determines whether a word that has been assigned to a W02G sub-pallet is significant (whether data has been stored in the data field of the word). If the word is significant (not empty), processing is exited directly. If the word is not significant (empty), prescribed processing (setting of an initial value, etc.) for establishing significance is attempted. If it is so arranged that a word that is not significant is provided with significance (if data is stored in the data field), then processing is exited. The homogeneity vector program (W02G) is not always required.

Duplicate vector-type homogeneity vector: This is a program for determining whether significance has been established for each word that belongs to a W02G sub-pallet. The processing is similar to that of Fig. 17 (where "self-generate" is data move processing).

Rationality-type duplicate vector program: A rationality-type duplicate vector program (referred to below as an R-type duplicate vector program) is a program which, if use is made of data stored in a word (data field) handled by a pallet function program controlled by a different tense control function program (e.g., an applicable case is one in which "T0" and "K" are linked in the process route diagram shown in Fig. 4), executes processing for duplicating (moving) data that has been stored in such a word. Data that has been stored in a word assigned to a W04P sub-pallet (another W04P sub-pallet) controlled by a different tense control function program is moved by this R-type duplicate vector program. The processing is similar to that of Fig. 11.

Homogeneity vector program (W04P): Homogeneity vector programs (W04P) the number of which is the same as the number of words that belong to a W04P sub-pallet are prepared. The homogeneity vector program determines whether a word that has been assigned to a W04P sub-pallet is significant (whether data has been stored in the data field of the word, i.e., whether the data field is empty or not). If the word is significant, processing is exited directly. If the word is not significant (if data has not been stored in the data field), prescribed processing (the four arithmetic operations or data move processing) for establishing significance is attempted. If it is so arranged that a word that is not significant is provided with significance (if data is stored in the data field), then processing is exited. Processing is similar to that of Fig. 17.

The results of processing executed by the R-type duplicate vector program, duplicate vector program and homogeneity vector program (W04P) become the object (this will be described later) of a "RESTART?" decision in a W03 pallet function program, described later.

Routing action vector program (W04P): This is a program for stipulating to which W04 pallet processing control should proceed depending upon which condition. The number of routing action vector programs prepared conforms to the number of branches. Processing is similar to that illustrated in Fig. 14.

The "RESTART?" processing of the W03 pallet function program (Fig. 10) signifies repeating processing until "DUPLICATE" in the R-type duplicate vector program is established, and furthermore, until data is stored in a word in which data is to be stored anew in the "SELF-GENERATE" section of the duplicate vector-type homogeneity vector program and "SELF-GENERATE" section in the homogeneity vector program (W04P). Since the W03 pallet is a section which connects to the base structure to which control is to proceed next in the Lyee base structure (see Fig. 4, etc.), generally it is necessary that data of some kind be stored in a word (a word that has been assigned to a W04P sub-pallet). In a case where data has not been stored in a word, processing is repeated here and control proceeds to processing in the next base structure when data is stored in a word.

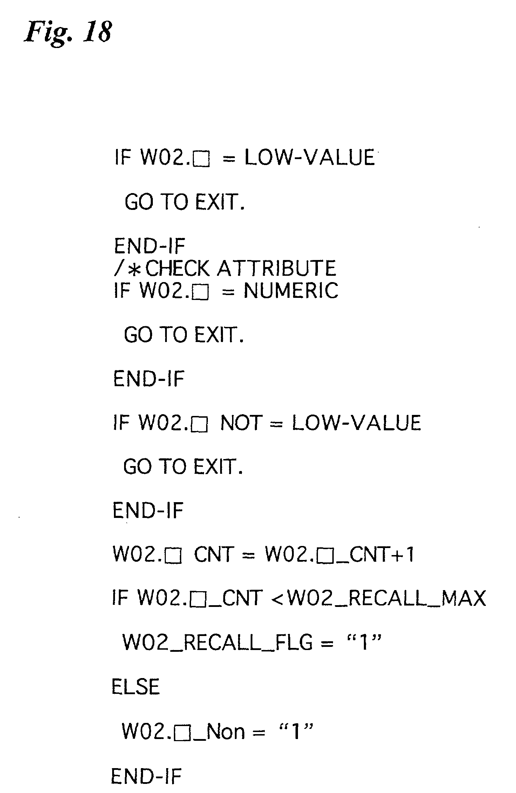

A specific example of a homogeneity vector program (W02), which is one vector program, is illustrated in Fig. 18. This program has been programmed so as to satisfy the processing structure shown in Fig. 16. An identifier (word identifier), which represents a W02 pallet word, is stored in the boxes (blank fields) □ [i.e., a homogeneity vector program (W02) is created for every W02 pallet word]. The same processing (attribute check) is executed for a plurality of W02 pallet words. Only a part of the program description changes depending upon a change in word (the part for making a determination to the effect that if data that has been stored in a word is a "numerical value", control proceeds to the next process, and if data that has been stored in a word is a "character", control proceeds to the next process).

A plurality of the above-described vector programs and pallet function programs are created for each of a plurality of words (words that have been assigned to pallets), definitives and routes. A tense control function program is created for every base structure (if the processing is the same, an arrangement may be adopted in which one tense control function program is created with regard to a plurality of base structures). Software that has been created in accordance with the Lyee methodology is composed in its entirety of a plurality of the programs described above. Even if processing of the software differs, the type of program created and the processing structure of the program (the flow of processing in the above-described flowcharts) are the same. The description of the "SELF-GENERATE" portion in the homogeneity vector program (Fig. 17) and the description of the decision portion in the output (input) vector program (Fig. 13) merely differ in accordance with the function of the software. [A program of the kind shown in Figs. 8 to 17 having a portion that does not change depending upon the software function of the program (the portion used in repetition when the Lyee program is generated automatically) and a portion for which processing specific to the software is substituted, as in the case of "ACCEPTANCE?" or "DETERMINE", is referred to as a "template"]. Thus, software created by a development method in accordance with the Lyee methodology is easy to analyze because the structure thereof is clearly defined. Moreover, even if a new function is added on, it will suffice to add on a program (a plurality thereof) (or a program description) so as to satisfy the base structure with regard to the word (data field) (in a case where a new screen output item is added) that implements the function. Software revision (upgrade) also is achieved rapidly.

### 2. Reconstructing a conventional program as a Lyee program

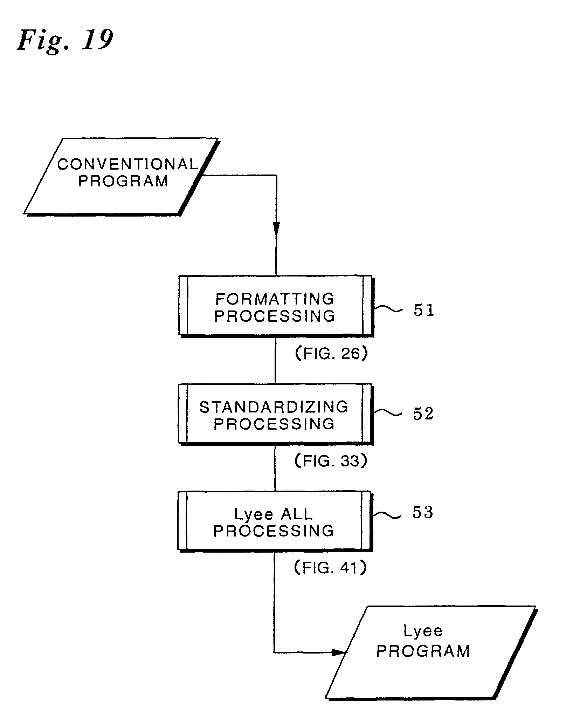

Fig. 19 is a flowchart illustrating the overall flow of processing for reconstructing (reproducing) an existing program (referred to as a "conventional program" below), which has been created through a method other than the Lyee development method, as a program having a new structure that is in accordance with the Lyee methodology while the functions accomplished by the conventional program are maintained.

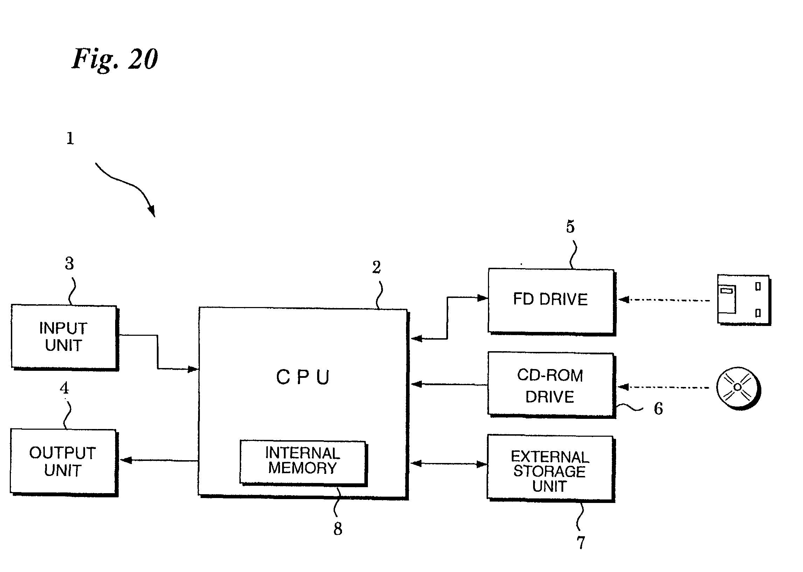

Program reproduction processing (a program) is executed in the order of formatting processing (program) 31, standardizing processing (program) 32 and Lyee ALL processing (program) 33. Some of this processing can be performed by a manual operation rather than by computer processing. The program for program reproduction processing can be recorded on a recording medium such as a CD-ROM. If a program reproduction processing program recorded on a recording medium such as a CD-ROM is installed in a computer (a personal computer or work station, etc.), the computer will be capable of operating as a program reproducing apparatus. An example of the hardware configuration of a program reproducing apparatus is illustrated in Fig. 20.

A program reproducing apparatus 1 includes a CPU 2. Connected to the CPU 2 are an input unit 3 (keyboard, mouse, etc.) for accepting a data input via a bus; a display unit 4 (CRT display device, printer, etc.) for outputting data and the like in visible form; an FD drive 5 for reading data, etc., recorded on a floppy disk (FD) and for recording data and the like on an FD; a CD-ROM drive 6 for reading data and the like recorded on a CD-ROM; and an external storage device 7 on which an operating system, program reproducing processing program and the above-described templates, etc., have been recorded. An internal memory 8 within the CPU 2 (or connected to the CPU 2) provides a program area and a buffer area, etc.

In a case where a computer system used in a factory, office or home is made to implement a prescribed function, often the program (conventional program) for this processing is composed of a plurality of programs. In a large-scale system, the number of programs can reach several hundred. According to program production processing, basically the three above-mentioned types of processing (formatting processing, standardizing processing and Lyee ALL processing) are applied to programs one at a time.

### (1) Formatting processing (step 51)

In formatting processing, processing for facilitating the reconstruction (reproduction) of a conventional program to a Lyee program is executed, this processing including extracting information necessary for reproduction processing from the program description of the conventional program and collecting this information in a table; shaping the conventional program (clarifying the syntax); evaluating the attributes of words contained in the conventional program (determining whether a word is a given word, a self word, a numerical value or a word that has been defined by a programmer, etc.); and creating a process route diagram. The details of formatting processing will be described later.

### (2) Standardizing processing (step 52)

In standardizing processing, the processing executed includes determining positioning (assigning words to pallets) of words, which are contained in a conventional program, in the structure of a Lyee program, and rewriting statements contained in the conventional program in order to make them comply with the Lyee methodology (rules). The creation of information for input (registration) to a tool (Lyee ALL) for creating a Lyee program also is performed in this standardizing processing. The details of standardizing processing will be described later.

### (3) Lyee ALL processing (step 53)

In Lyee ALL processing, processing is executed for substituting information, which has been obtained through the above-mentioned formatting processing and standardizing processing and which is required to satisfy the structure of a Lyee program while maintaining the functions of the conventional program, into a prescribed position of a program (template) that represents the basic processing structure of the Lyee program. The details of Lyee ALL processing will be described later.

In the description that follows, the flow of processing for generating a Lyee program (a program created in accordance with the Lyee development method) from a conventional program created by COBOL (COmmon Business Oriented Language) (a program created by a method that is not compliant with the Lyee development method) will be set forth in detail.

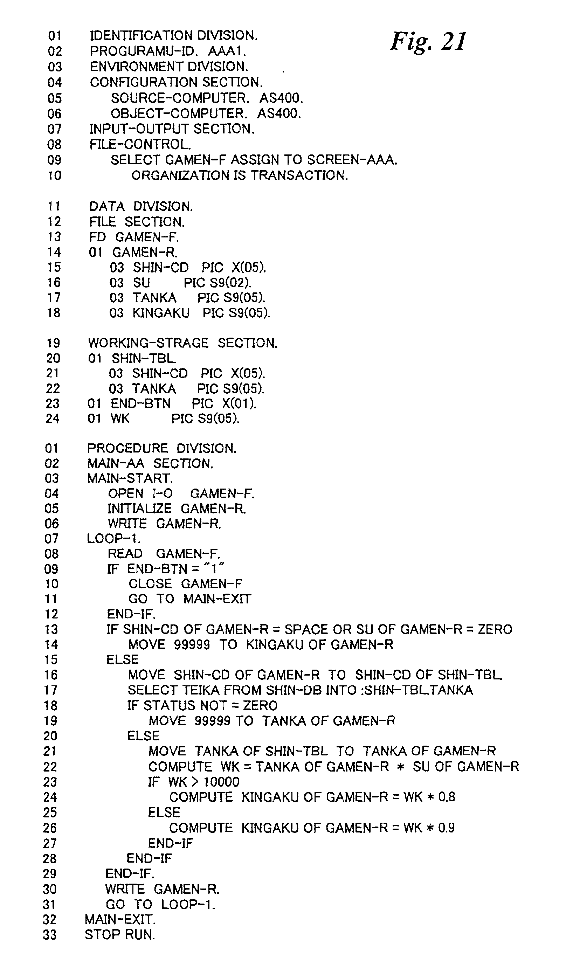

Fig. 21 shows an example of a conventional program created by COBOL. For the sake of explanation, line numbers are shown at the left of program statements and are divided into PROCEDURE DIVISIONS (described later) and other divisions.

The content of the conventional program (COBOL program) shown in Fig. 21 will be described first.

The COBOL program includes the following four divisions:
(i) IDENTIFICATION DIVISION; line 01
(ii) ENVIRONMENT DIVISION; line 03
(iii) DATA DIVISION; line 11
(iv) PROCEDURE DIVISION; line 01

(i) The program name (program ID) is described in IDENTIFICATION DIVISION (line 02: PROGURAMU-ID. AAA1.). This COBOL program is a program whose program name (program ID) is "AAA1".

(ii) ENVIRONMENT DIVISION includes a CONFIGURATION SECTION (line 04) and an INPUT-OUTPUT SECTION (line 07).

The names of the computers (the translation computer name and the execution computer name) that are to process the COBOL program are described in the configuration section. In the conventional program shown in Fig. 21, it is described that the translating computer name is "AS400" (line 05: SOURCE-COMPUTER. AS400.) and that executing computer name is "AS400" (line 06: OBJECT-COMPUTER. AS400.). The file management paragraph (FILE-CONTROL) (line 08) of the input-output section describes the name of the device (input-output device name) for applying data to the computers (the translating computer and executing computer) and outputting the results of processing. It is described that a file called "GAMEN-F" is set in an input-output device called "SCREEN-AAA" (line 09: SELECT GAMEN-F ASSIGN TO SCREEN-AAA). "ORGANIZATION IS TRANSACTION." (line 10) means that the file called "GAMEN-F" is to undergo transaction processing.

(iii) The data division includes FILE-SECTION (line 12) and WORKING-STORAGE SECTION (line 19).

The relationship among a file, a record constructing the file and the items contained in the record is described in FILE-SECTION. There are various files, namely a file set in (stored in or written to) a database, etc., a file output to (displayed on) a screen or the like, a file input from a screen or the like, and a file output to (written on) a form or the like.

According to the conventional program shown in Fig. 21, the file called GAMEN-F is a file (line 09) set in the input-output device "SCREEN-AAA". That is, this is a file for handling an item displayed on the display screen of the display unit. The record of such a file is referred to as a definitive "screen". The identifier which identifies the type of the definitive "screen" is "GAMEN-R", described later.

The fact that "GAMEN-F" has a record (group item) called "GAMEN-R" and that this includes the items (basic items) "SHIN-CD", "SU", "TANKA" and "KINGAKU" is described on lines 13 to 18 of DATA DIVISION. "PIC X" following the description of a basic item means that the data to be handled by this basic item is character data, and "PIC S9" means that the data to be handled is numerical data accompanied by a code. The numerical value within the parentheses indicates the number of digits (number of characters).

As mentioned above, a data field in which data of some kind is set (the most basic, smallest unit for managing data handled by software) is referred to as a "word" according to Lyee. It is understood from the description of the above-mentioned FILE-SECTION that the words "SHIN-CD", "SU", "TANKA" arid "KINGAKU" are being used in the conventional program shown in Fig. 21. It is understood that these words are words that belong to the definitive "GAMEN-R".

Areas (working areas) in which results currently undergoing processing are stored are defined in WORKING-STORAGE SECTION. Two areas "SHIN-CD" and "TANKA" are provided in a database "SHIN-TBL", and two areas "END-BTN" and "WK" are provided as well. Since these areas also are data fields in which data of some kind is set, they are positioned as "words" in Lyee.

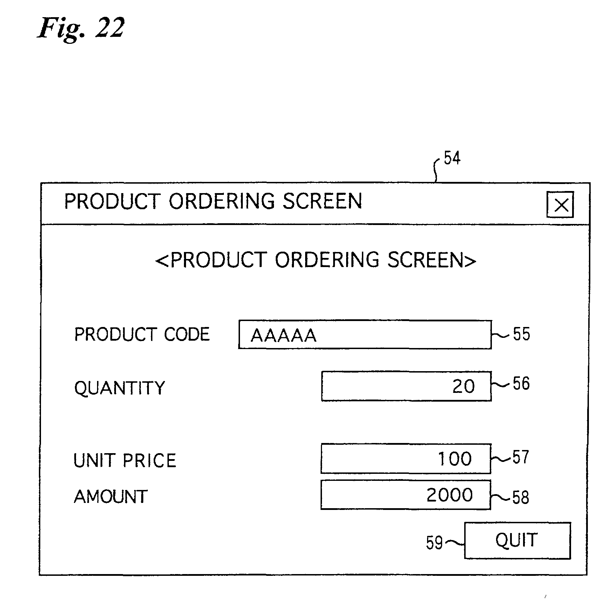

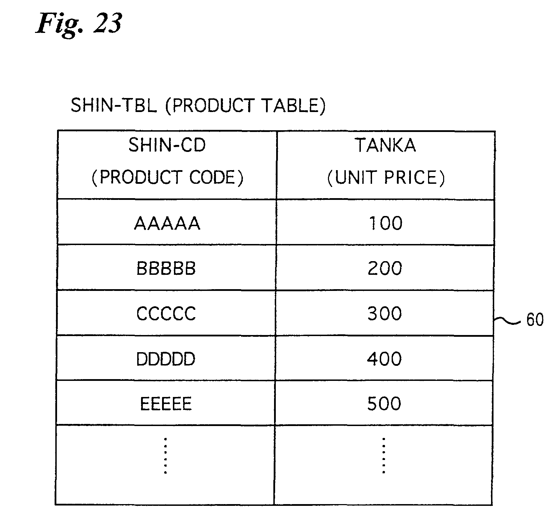

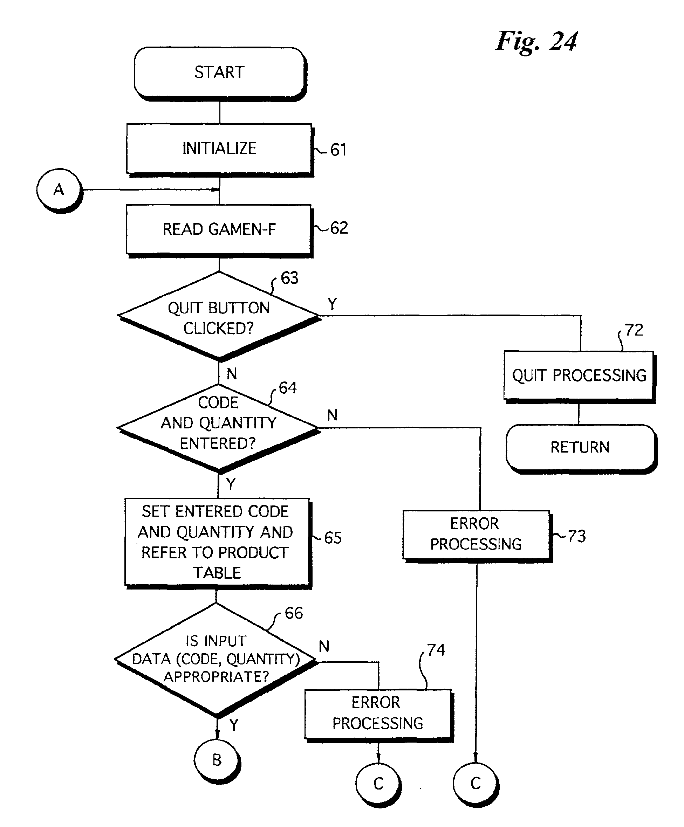

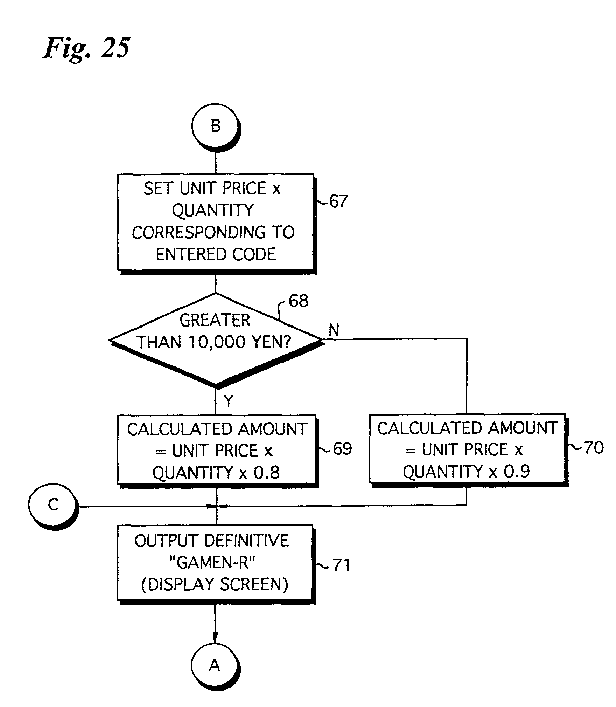

(iv) The content of specific processing is described in PROCEDURE DIVISION. An example of a screen (product ordering screen) displayed on the display screen of the display unit by the conventional program shown in Fig. 21 is illustrated in Fig. 22, an example of a database (product table) prepared in advance is illustrated in Fig. 23, and a flowchart illustrating the flow of processing of the conventional program based upon the description of PROCEDURE DIVISION is illustrated in Figs. 24 and 25.

A product code input box 55, quantity input box 56, unit price input box 57, amount display box 58 and quit button 59 are displayed on a display screen [the identifier (definitive identifier) of this screen is "GAMEN-R] 54. The data fields corresponding to these input and output boxes are SHIN-CD, SU, TANKA and KINGAKU, respectively. The product database (product table) 60 [the identifier (definitive identifier) of this database is "SHIN-TBL"] includes the product code (SHIN-CD) and unit price (TANKA).

If the conventional program of Fig. 21 is executed, initialization is carried out (step 61) and then GAMEN-F (the file for presenting a display on the display unit) is read in (step 62). The screen 54 shown in Fig. 21 is displayed on the display screen of the display unit.

The quit button 59 on the display screen 54 is clicked if processing of the conventional program is to be terminated. If the quit button 59 is clicked, the processing of the conventional program ends ("YES" at step 63; step 72).

If an enter key on the input unit (keyboard, etc.) is pressed, it is determined whether data has been entered in the product code input box 55 and quantity input box 56 of the display screen 54 ("NO" at step 63; step 64). In the conventional program shown in Fig. 21, the fact that data has been input to the product code input box 55 and quantity input box 56 is the premise of the series of processing steps. In a case where data has not been input to either or both of the product code input box 55 and quantity input box 56, error processing is executed ("NO" at step 64; step 73; "99999" displayed in amount display box 58 of display screen 54).

In a case where data has been input to the product code input box 55 and quantity input box 56 of display screen 54 ("YES" at step 64), the data representing the entered product code and quantity is set in the working memory. Reference is made to the product table 60 based upon the entered product code (step 65).

It is determined whether the input data (product code and quantity) is the appropriate data (step 66). For example, it is decided beforehand that the product code input box 55 must correspond to the data field "SHIN-CD" (data entered in the product code input box 55 is stored in the data field "SHIN-CD") and that the data to be stored in "SHIN-CD" must be character data composed of five characters (data section "DATA DIVISION" on line 15). If numerical data is entered in the product code input box 55, a non-existent code is entered in the product code section of the product table 60 or character data is entered in the quantity input box 56, error processing is executed ("NO" at step 66; step 74; "99999" displayed in the unit price box 57 of display screen 54).

If the input data is appropriate ("YES" at step 66), the result of multiplying the unit price (refer to the product table 60) of the product corresponding to the product code that has been entered in the product code input box 55 by the quantity that has been entered in the quantity input box 56 is set in the working memory (step 67).

It is determined whether the set result of multiplication has exceeded 10,000 (yen) (step 68). If the result of multiplication has exceeded 10,000 yen ("YES" at step 68), the calculated amount is made the result of multiplying the result of multiplication (product unit price x quantity) by 0.8 (step 69). The unit price of the product is displayed in the unit price box 57 and the calculated amount is displayed in the amount display box 58 (step 71). If the result of multiplication is 10,000 yen or less ("NO" at step 68), then the result of multiplying the result of multiplication by 0.9 is displayed in the amount display box 58 (steps 70, 71).

The flow of processing for reconstructing (reproducing) the conventional program shown in Fig. 21 as a Lyee program while the functions of the conventional program are maintained will now be described in detail. As mentioned above, program reproduction processing is executed in the order of formatting processing, standardizing processing and Lyee ALL processing (Fig. 19).

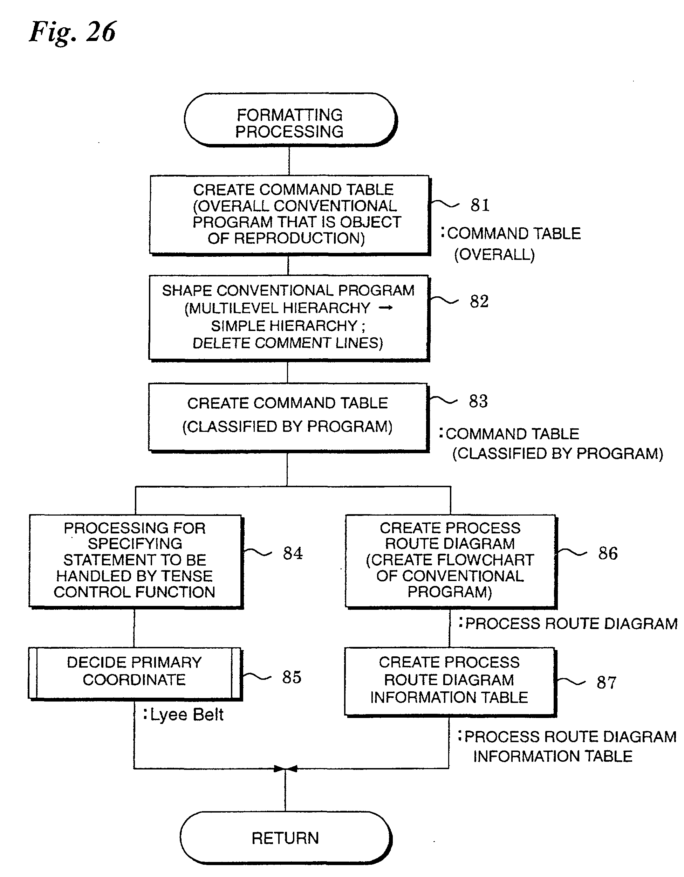

Fig. 26 is a flowchart illustrating the details of the content of formatting processing (step 51). Most of these processes can be executed automatically by computer.

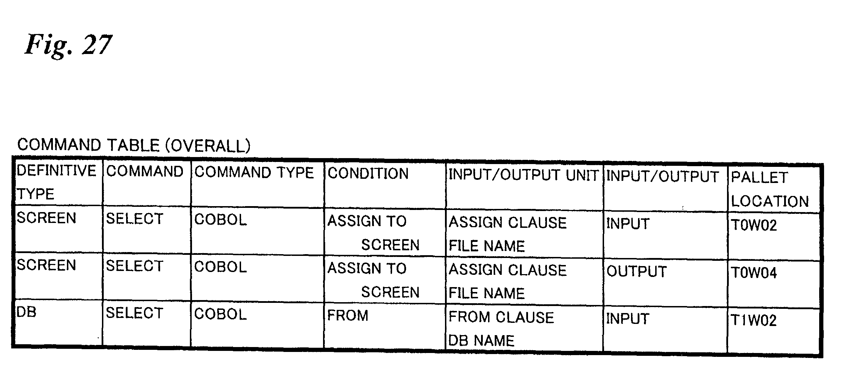

A command table (overall table) is created based upon the description of the conventional program (step 81). Fig. 27 illustrates the command table (overall table) created based upon the description of the conventional program (COBOL program) shown in Fig. 21.

The command table (overall table) is created taking as the object all programs that operate the system. For the sake of explanation, it will be assumed that the conventional program shown in Fig. 21 is the program (overall program) that operates the system.

The command table (overall table) has columns for types of definitives, commands, types of commands (program languages), conditions, external files, input/output categories and pallet locations.

Data representing types of definitives defined by the conventional program (used by processing of the conventional program) is stored in a "DEFINITIVE TYPE" column. The definitive signifies the input/output medium handled by the computer and includes a screen, database and file, etc., as set forth earlier. The type of definitive defined by the conventional program is ascertained from the description of the INPUT-OUTPUT SECTION in the ENVIRONMENT DIVISION and the description of DATA DIVISION of the conventional program. Of course, if screens of different types are being used in one system (i.e., in the case of a conventional program so described), for example, then data that makes it possible to distinguish even the type of screen, such as "Screen 1" and "Screen 2" is described. The same is true with regard to the database (DB).

Commands used in order that input/output units (definitives) defined in the conventional program may be found from the description of the conventional program are stored in a "COMMAND" column.

A "COMMAND TYPE" column indicates the type of program language description (arrangement) used as a description for searching for an input/output unit described in a "CONDITION" column or "INPUT/OUTPUT UNIT" column, described later.

Conditions for finding, from the description of the conventional program, an input/output unit that handles a definitive are described in a "CONDITION" column. "ASSIGN TO SCREEN" means that the name of an input/output unit regarding the definitive "SCREEN" is described following the description "ASSIGN TO SCREEN" in the conventional program. "FROM" means that the name of an input/output unit regarding the definitive "DB" is described following the description "FROM" (this is the arrangement of a COBOL program). The INPUT/OUTPUT UNIT column describes the fact that a file name is described in the ASSIGN clause and that a database name is described in the FROM clause of the COBOL program.

Data ("INPUT" or "OUTPUT") indicating whether the definitive that has been stored in the "DEFINITIVE TYPE" column is a definitive relating to input or a definitive relating to output is stored in an "input/output category" column (INPUT/OUTPUT).

Pallet type is stored in a "PALLET LOCATION" column based upon data that has been stored in the "DEFINITIVE TYPE" column and data that has been stored in the "COMMAND" column (or data that has been stored in the "INPUT/OUTPUT CATEGORY" column). Either "T0", "T1" or "K" is decided by the type of definitive stored in the "DEFINITIVE TYPE" column. Either "W04" or "W02" is decided by the command that has been stored in the "COMMAND" column (or by the category that has been store in the "INPUT/OUTPUT CATEGORY" column). For example, the definitive "SCREEN" is a definitive handled in the on-line process T0. Further, the definitive "SCREEN" is used in input (input of product code and input of quantity) and in output (output of unit price and output of amount). If the definitive type is "SCREEN" and the input/output category is "INPUT", "T0W02" is stored; if the definitive type is "SCREEN" and the input/output category is "OUTPUT", then "T0W04" is stored. The command table (overall table) may be created by a technician based upon the description of the conventional program.

Next, the conventional program is shaped (step 82). The conventional program shown in Fig. 21 is a program (one whose shaping has been completed or one that does not require shaping) obtained through processing (step 82) for shaping a conventional program. The details of processing (step 82) for shaping the conventional program, therefore, will be described later.

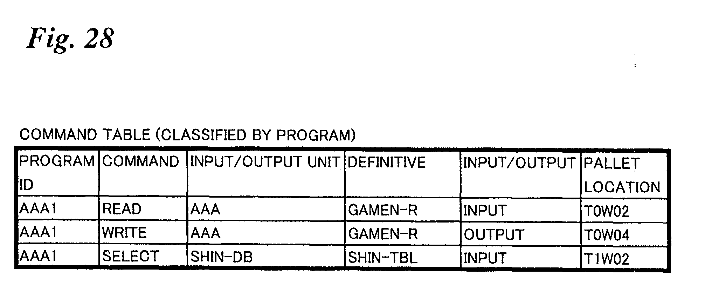

A command table (classified by program) is created (step 85). The command table (classified by program) is illustrated in Fig. 28.

As shown in Fig. 28, the command table (classified by program) has program ID, command, external file, definitive, input/output category and pallet location columns.

Program names (program IDs) described in IDENTIFICATION DIVISION of the conventional program are stored in a "PROGRAM ID" column. The program that operates the system can be specified by the program name (program ID). A command table (classified by program) is created for each program name (program ID).

Commands related to data input/output, which appear in PROCEDURE DIVISION of the conventional program specified by the above-mentioned program IDs, are stored in a "COMMAND" column.

Data representing input/output unit names retrieved from the conventional program are described in an "INPUT/OUTPUT UNIT" column in accordance with the descriptions in the "CONDITION" column of the above-described command table (overall command table).

The definitive names of definitives (screen, DB, etc.) processed by commands stored in the "COMMAND" column are stored in a "DEFINITIVE" column based upon the descriptions in DATA DIVISION and PROCEDURE DIVISION.

For example, since a "WRITE" command on line 06 of PROCEDURE DIVISION in the conventional program shown in Fig. 21 is a command for performing processing regarding "GAMEN-R", "GAMEN-R" is stored in the "DEFINITIVE" column corresponding to the command "WRITE".

An "INPUT/OUTPUT CATEGORY" column and a "PALLET LOCATION" column are similar to those of the command table (overall table) described above.

The command table (classified by program) can be created by computer based upon the command table (overall). Of course, an arrangement may be adopted in which this command table is created based upon description of the conventional program.

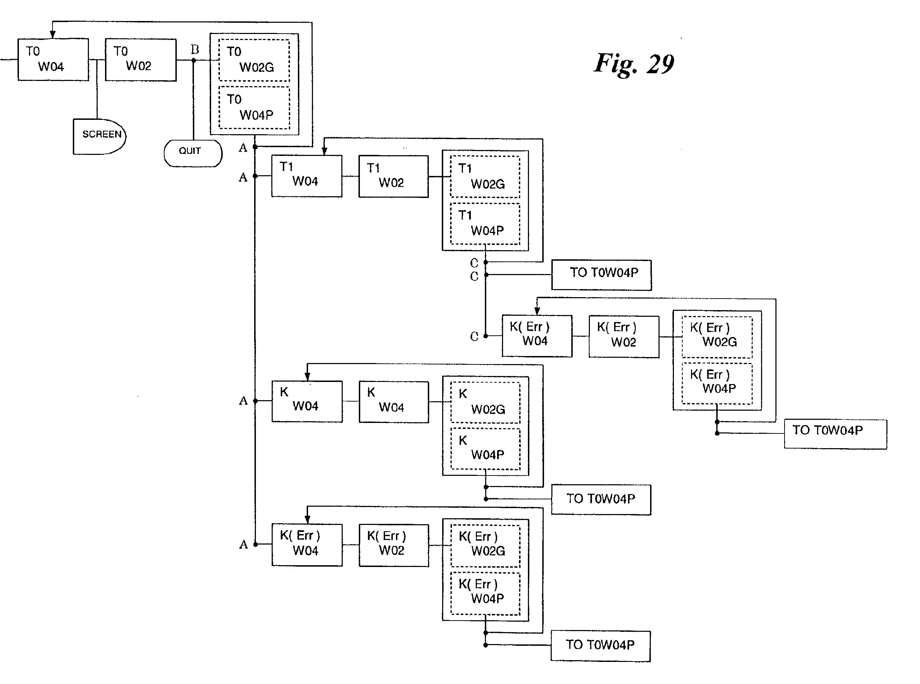

A process route diagram is created (step 46). Fig. 29 illustrates a process route diagram that has been created based upon the description of the conventional program shown in Fig. 21.

It is ascertained from the created command table (classified by program) that the conventional program includes the T1 and T0 base structures. Further, it is considered that the K base structure exists in the conventional program since a word (data field) defined by the programmer who created this program generally is used. Furthermore, it is considered that a base structure (one mode of K) for executing error processing is appended to each of the T0 and T1 base structures. A base structure (cyclic structure) consisting of the W04 pallet, W03 pallet and W02 pallet is drawn with regard to each of T0 and T1 and these base structures are connected [W03 pallets (W04P sub-pallets) of the T0 base structures and W04 pallets of the T1 base structures are connected by lines representing the route]. K base structures are drawn and are connected to the T0 base structures. K base structures of error processing regarding each of the T0 and T1 base structures are drawn and these are connected to the T0 and T1 base structures. A process route diagram of the kind shown in Fig. 29 is created.

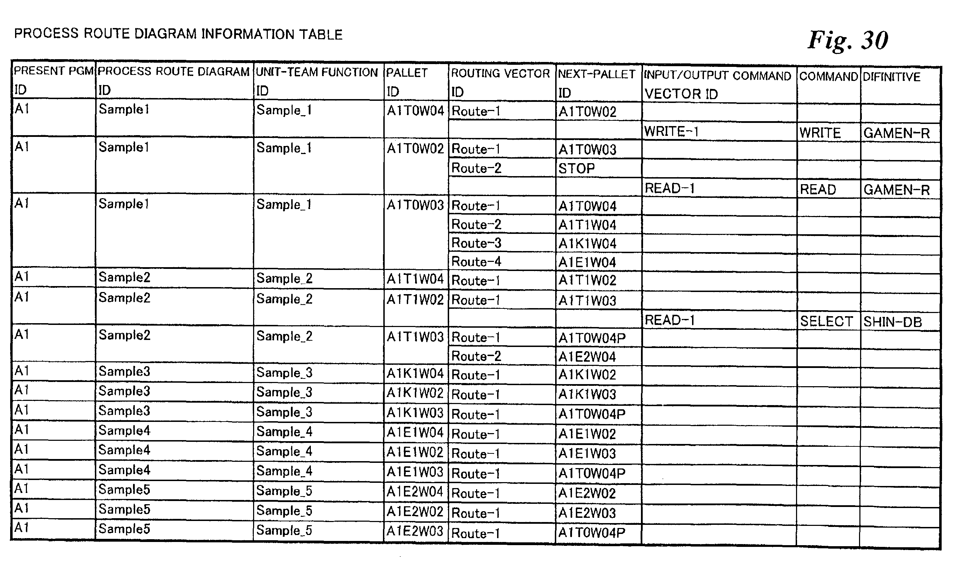

Information extracted from the created process route diagram is collected in a table (process route diagram information table). Fig. 30 illustrates a process route diagram information table. The process route diagram information table is provided with present program ID (present PGM ID), process route diagram ID, unit team ID, pallet ID, routing vector ID, next-pallet ID, input/output command vector ID, command and definitive columns.

"PRESENT PGM ID (PRESENT PROGRAM ID)" is an ID assigned to each conventional program. In a case where a plurality of conventional programs are regenerated as Lyee programs, each is identified by a present program ID.

"PROCESS ROUTE DIAGRAM ID" is an ID assigned to each base structure. As mentioned above, basically a tense control function program is provided for each base structure (cyclic structure). IDs which identify tense control function programs for overall control of respective ones of the base structures are stored in the column of unit team IDs.

"PALLET ID" is an ID for identifying each pallet constructing a base structure. IDs are assigned in such a manner that each of the pallets (W04 pallet, W02 pallet and W03 pallet) included in the plurality of base structures can be identified.

"ROUTING VECTOR ID" is an ID for identifying a route extending from a pallet identified by a pallet ID. For example, in the process route diagram shown in Fig. 29, the route extending from the T0W03 pallet (T0W04P pallet) is connected to the T0W04 pallet, T1W04 pallet, KW04 pallet and K (Err) W04 pallet [indicated at characters A (branch points) in Fig. 29]. IDs (Route-1, Route-2, Route-3 and Route-4) are assigned to respective ones of these routes.

"NEXT-PALLET ID" is an ID for identifying a pallet (the next pallet), which is connected to a pallet specified by a pallet ID that has been stored in the "PALLET ID" column, by a route identified by a route vector ID. Since the above-mentioned pallet ID is assigned to each pallet drawn in a process route diagram, this pallet ID is used to represent the pallet (next pallet) connected to the route identified by the route vector ID.

"INPUT/OUTPUT COMMAND VECTOR ID" is an ID which, in a case where a pallet identified by a pallet ID accesses a screen, database or file, etc. (reads data or writes data, etc.), identifies whether this pallet is a pallet that executes processing for reading (inputting) data or a pallet that executes processing for writing (outputting) data. "WRITE-1" is stored in a pallet that executes processing for reading (inputting) data, and "READ-1" is stored in a pallet that executes processing for writing (outputting) data. Specific commands for inputting/outputting data used in PROCESS DIVISION of the conventional program are stored in a "COMMAND" column.

The names of definitives handled by the commands that have been stored in the above-described "COMMAND" column are stored in a "DEFINITIVE" column.

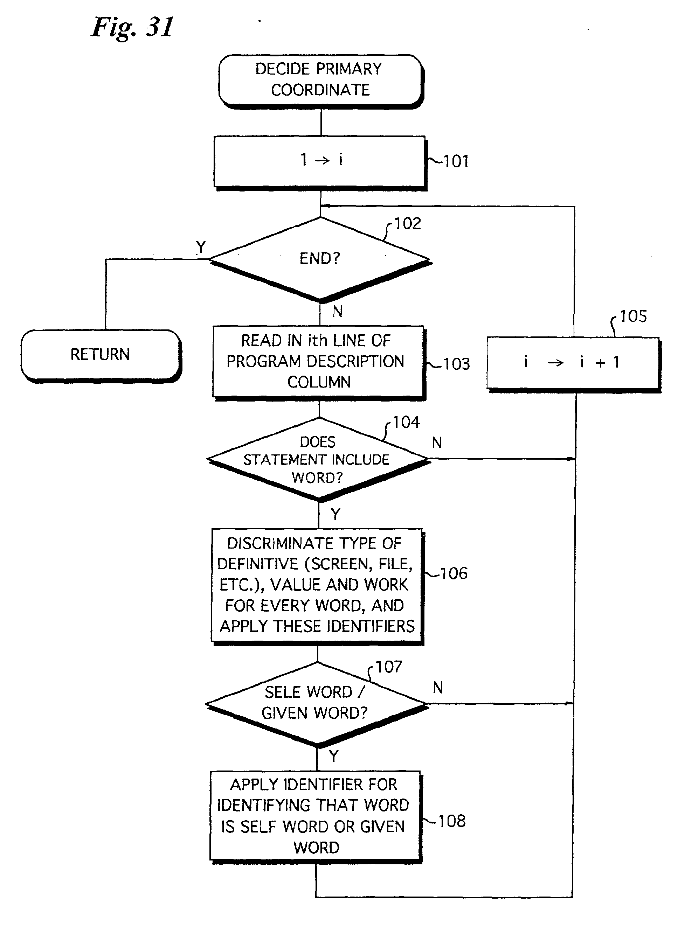

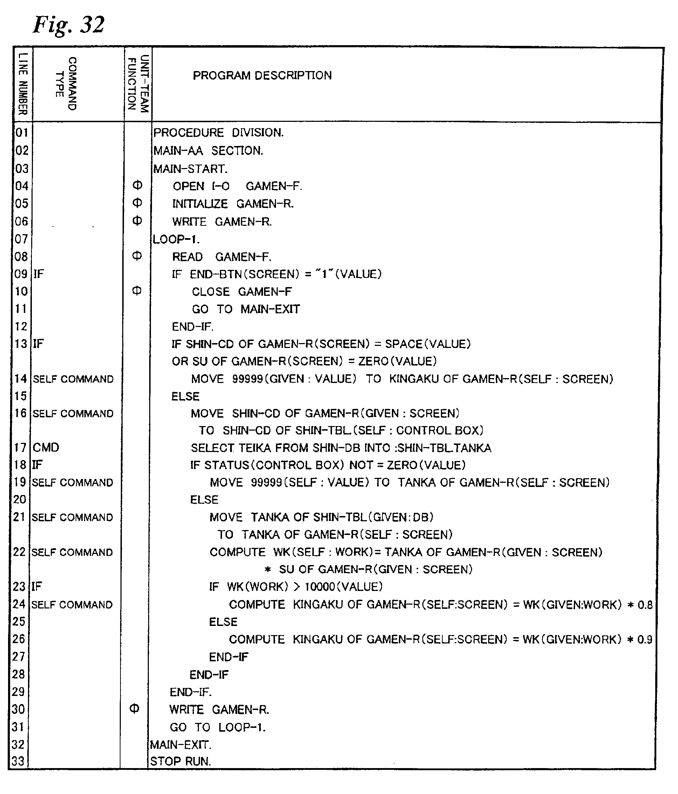

With reference again to Fig. 26, processing for specifying a statement (program statement) to be handled by a tense control function program (processing for specifying statement handled by tense control function; step 84) and primary coordinate decision processing (step 85) is executed based upon the conventional program and command table (classified by program). The results of this processing are reflected in a Lyee belt, which is indicated next. Fig. 31 is a flowchart illustrating the details of primary coordinate decision processing, and Fig. 32 illustrates an example of a Lyee belt (a Lyee belt created from the conventional program shown in Fig. 21).

A Lyee belt (Fig. 32) includes a line-number description column, a command-type description column, a unit-team function description column and a program description column in which PROCEDURE DIVISION of the conventional program is described (a table in which these items of information are described is a Lyee belt). The results of processing for specifying a statement to be handled by the tense control function (step 84) are described in the unit-team function description column. The results of primary coordinate decision processing (step 85) are described in the program description column.

With regard to statements (program statements) described in the program description column, the types of prescribed commands contained in these statements are described in a "COMMAND TYPE" description column. This column describes whether a command included in a statement described in the program description column is a command (self command) for applying processing to a self word, an IF statement (IF), or another command (CMD) relating to data input/output. For example, "MOVE 99999 TO KINGAKU OF GAMEN-R" on line 14 of the statements described in PROCEDURE DIVISION of the conventional program is a program statement for applying processing to the self word "KINGAKU (OF GAMEN-R)". "SELF-WORD COMMAND" (data representing the fact that the command is a self-word command) is described in the command-type description column corresponding to line 14.

The results of processing (step 84) for specifying a statement to be handled by the tense control function are described in the "UNIT-TEAM FUNCTION" description column. This is processing for specifying a statement (program statement) to be handled by the above-mentioned tense control function program. A prescribed mark is stored in correspondence with the statement for executing physical processing with respect to a definitive (screen, etc.). A statement that has been marked signifies that it is a statement to be used in the tense control function program (as part of a program statement of the tense control function program).

Results of processing by primary coordinate decision processing (step 85) are appended to the description of PROCEDURE DIVISION of the conventional program in the program description column. The details of primary coordinate division processing will now be described with reference to Fig. 31. Primary coordinate division processing basically is executed by computer. Of course, it may be so arranged that some of this processing is allowed to be executed by a technician.

The first line of statements of the conventional program described in PROCEDURE DIVISION of the conventional program is read into the CPU 2 (or internal memory or storage means) of the program reproducing apparatus 1 (steps 101, 103). A counter in the program reproducing apparatus 1 is incremented.

It is determined whether the statement read into the CPU 2 includes the description of a word (whether it includes a word) (step 104). Whether or not a word is included in the statement can be determined by determining whether a character string identical with a character string representing a word described in DATA DIVISION of the conventional program is included in part of the character string contained in the statement that has been read in.

If the statement read into the CPU 2 does not include a word, the counter is incremented and the statement of the NEXT line is read in ("NO" at step 104; step 105; step 103).

If the statement does include a word ("YES" at step 104), it is determined whether the word is a word (a definitive word) that belongs to a definitive [screen, file, DB (database), etc.], a numerical value (value), or a word that does not belong to a definitive and that is not a numerical value (generally a word created by the programmer who created the conventional program; this is referred to as a "work"). Further, if a word in a statement is a definitive word, even the name of definitive to which the word belongs is discriminated (step 106).

In the determination as to the kind of word that is included in a statement, reference is had to the description of DATA DIVISION and the description of the file paragraph (FILE-CONTROL) of ENVIRONMENT DIVISION. For example, if "MOVE 99999 TO KINGAKU OF GAMEN-R" on line 14 is read in, it is understood that this statement contains "99999" and the word "KINGAKU (OF GAMEN-R)". It is understood that "99999" is a numerical value (value). Further, it is understood that the word "KINGAKU (OF GAMEN-R)" is a word that belongs to a screen definitive named "GAMEN-R" based upon the description ("OF GAMEN-R") regarding the definitive that follows "KINGAKU", the description ("FD GAMEN-R" and "01 GAMEN-F") of DATA DIVISION, and the description "SELECT GAMEN-F ASSIGN TO SCREEN - AAA" of the file paragraph FILE-CONTROL in ENVIRONMENT DIVISION. An identifier (primary coordinate) indicative of a numerical value (value) is attached to "99999", and an identifier (primary coordinate, "SCREEN") indicative of a word belonging to a screen definitive is attached to the word "KINGAKU (OF GAMEN-R)". Thus, a primary coordinate is appended to a program description of a Lyee belt ["MOVE 99999 (value) TO KINGAKU OF GAMEN-F (screen)"].

A word ("STATUS" on line 18) other than a definitive word, numerical value of work is assigned an identifier (primary coordinate; here "CONTROL BOX") indicative of this fact. The appended identifier is stored temporarily in the internal memory 8 (storage means) together with the program (conventional program) described in the program description column.

Next, with regard to a word to which an identifier of any of definitive type, numerical value or work has been attached, it is determined whether the word is a self word or a given word (step 107). If the word is neither a self word or given word ("NO" at step 107), control proceeds to processing regarding the next statement (steps 105, 103).

The determination as to whether a word is a self word or given word is made by determining whether the word detected in word detection processing (step 104) is a word in a statement in which use is made of a word for substitution of (reference to) the value of a MOVE statement or COMPUTE statement, etc., and a word in which a value is substituted. For example, since "COMPUTE WK (work) = TANKA OF GAMEN-R (screen) * SU OF GAMEN-R (screen) on line 22 is a COMPUTE statement, it is understood that this statement includes a self word and a given word. In case of a COMPUTE statement, the word situated in front of "= (equal)" is a word (self word) in which data is substituted. The word situated after "= (equal)" is a word (given word) for substituting data. An identifier indicative of a self word is assigned to the word "WK", and an identifier indicative of a given word is assigned to the words "TANKA" and "SU" ["COMPUTE WK (self: work) = TANKA OF GAMEN-R (given: screen) * SU OF GAMEN-R (given: screen)"]. In case of a MOVE statement, the word situated in front of "T0" is a given word and the word situated after "TO" is a self word. The identifiers (data representing the identifiers) are appended to the program that has been stored in the internal memory 8 (the program to which the definitive identifiers, etc., have been appended is updated).

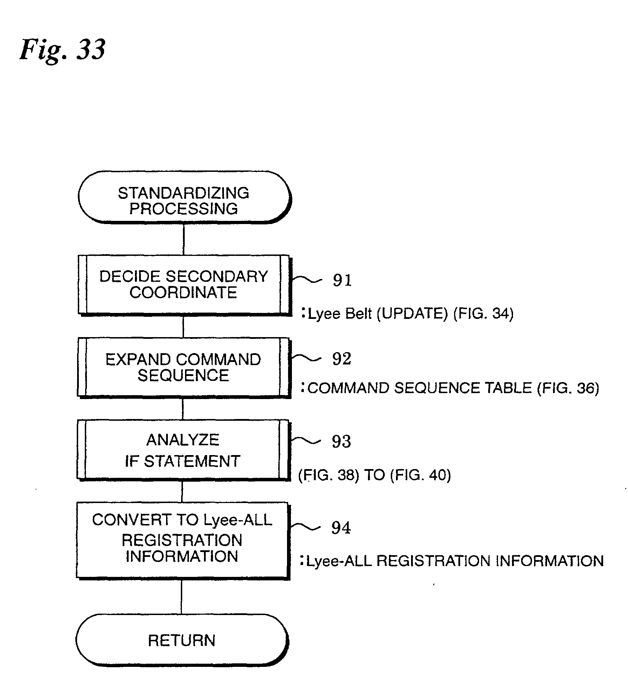

When the creation of the Lyee belt and the creation of the process route diagram information table is completed, control proceeds to standardizing processing (step 52 in Fig. 19). Fig. 33 is a flowchart illustrating the details of the content of standardizing processing (step 52).

In standardizing processing, new information is appended to the above-described Lyee belt (Fig. 32) by secondary coordinate decision processing (step 91). Furthermore, command expansion processing (step 92) and IF-statement analysis processing (step 93) is executed to create a command sequence table. Processing for creating Lyee ALL registration information is executed (step 54) based upon the created command sequence table and the above-described process route diagram information table, etc. The details of these processes will now be described in succession.

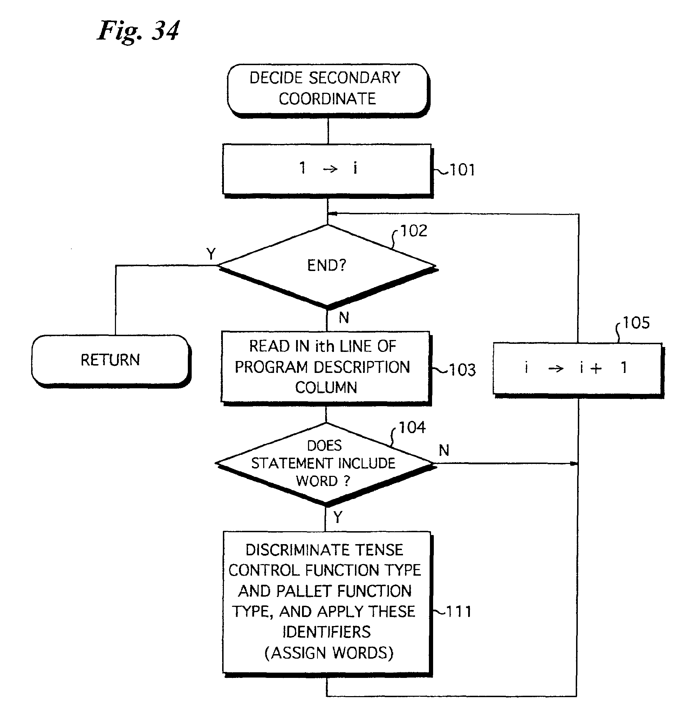

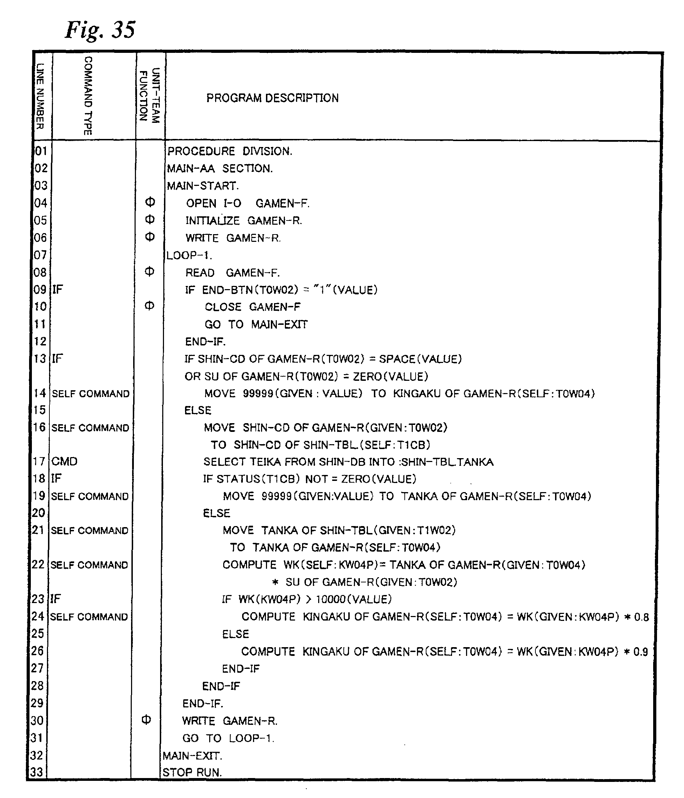

Fig. 34 is a flowchart illustrating the details of secondary coordinate decision processing (step 91), and Fig. 35 illustrates a Lyee belt (updated Lyee belt) obtained by secondary coordinate decision processing. Since secondary decision processing (Fig. 34) include processing identical with the primary coordinate decision processing (Fig. 31) described above, the processing steps identical with those of primary coordinate decision processing are designated by like step numbers and need not be described again.

Secondary coordinate decision processing also is executed by computer in a manner similar to that of primary coordinate decision processing. Of course, a technician may verify the results of processing and, if necessary, correct the results of processing.

With regard to each of the detected words [data representing the above-mentioned identifiers (primary coordinates) are appended to the words], tense control function type (T0, T1 or K) and pallet type (W04 pallet word, W02 pallet word, W02G sub-pallet word or W04P sub-pallet word) are discriminated and an identifier indicative there of attached to the word (step 111; assign word to pallet).

The judgment concerning the tense control function type of a word can be made based upon the type of definitive to which the word contained in the statement that has been read into the CPU 2 (or internal memory 8; storage means) belongs. For example, the definitive "GAMEN-R" is a screen definitive. Words belonging to the definitive such as a screen are positioned as tense control functions T0 (the type of tense control function is "T0"). "T0" is judged to be the type of tense control function of words ("SHIN-CD", "SU", "TANKA" and "KINGAKU") belonging to the definitive "GAMEN-R" (it is ascertained from the description of "OF GAMEN-R" following these words that these words are words belonging to the definitive "GAMEN-R"). In a case where these words are included in a statement that has been read into the CPU 2, identifiers (data indicative of T0, T1 or K) are appended so as to be attached to these words.

The judgment concerning the pallet type of a word is made depending upon whether the word is a word relating to input or a word relating to output. For example, the fact that words "SHIN-CD (OF GAMEN-R)" and "SU (OF GAMEN-R)" are words relating to input, i.e., W02 pallet words, is understood from the description of line 13 of PROCEDURE DIVISION. Ultimately, the identifier "T0W02" is attached to the words "SHIN-CD (OF GAMEN-R)" and "SU (OF GAMEN-R)" (the identifiers are appended to the program description column) (Fig. 35; updating of Lyee belt). Each word included in the conventional program is assigned to any of a plurality of pallets.

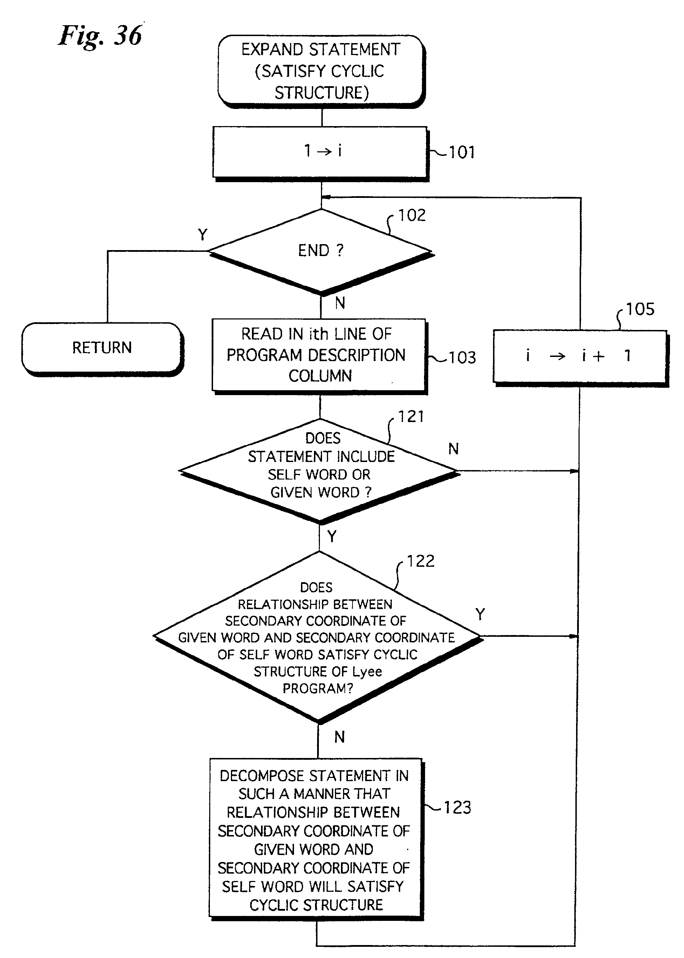

When secondary coordinate decision processing (step 91) ends, control proceeds to processing for expanding statements. Fig. 36 is a flowchart illustrating the flow of processing for expanding statements (for satisfying the base structure). Processing steps identical with those of primary coordinate decision processing (Fig. 31) are designated by like step numbers and need not be described again. Basically, processing for expanding statements also is executed by computer.

With regard to a statement that has been read into the CPU 2 (or internal memory 8), it is determined whether the statement is a statement (MOVE statement or COMPUTE statement, etc.) (a program statement that includes a self word and a given word) in which use is made of a word (given word) for substitution of (reference to) a value and a word (self word) in which a value is to be substituted. In case of a program statement other than a MOVE statement or COMPUTE statement, a counter is incremented and the statement of the next line is read in ("NO" at step 121; step 105).

If the statement that has been read in is a MOVE statement or COMPUTE statement, etc. ("YES" at step 121), reference is had to the secondary coordinate of the given word and the secondary coordinate of the self word contained in the statement. It is determined whether the cyclic structure (base structure) of Lyee is satisfied (step 122).

As mentioned above, a program (Lyee program) created in accordance with the Lyee methodology is programmed in such a manner that processing is executed in the order of a W04 pallet, W02 pallet and W03 pallet. Since program creation in accordance with such a method of creation is not carried out with a conventional program, programs (statements) that do not satisfy the cyclic structure exist. Processing for expanding statements (for satisfying the cyclic structure) is processing for detecting a statement that does not satisfy the cyclic structure and arranging it so that this statement will satisfy the cyclic structure.

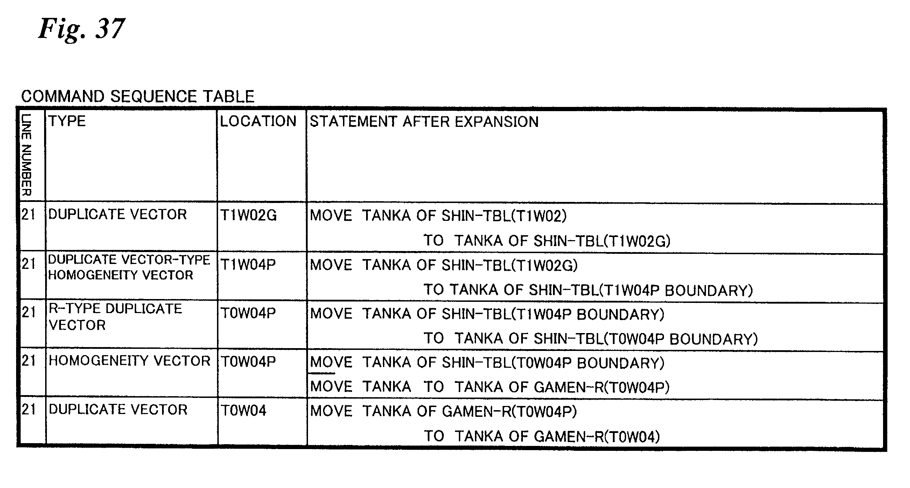

For example, "MOVE TANKA OF SHIN-TBL (given: T1W02) TO TANKA OF GAMEN-R (self: T0W04)" on line 21 is a statement for storing data, which is stored in a T1W02 pallet word [TANKA (OF SHIN-TBL)], in a T0W04 pallet word [TANKA (OF GAMEN-R)]. As seen from the viewpoint of the Lyee methodology, this statement is one in which the T0W04 pallet operates after the T1W02 pallet. It is a statement which runs counter to a program structure that is compliant with the Lyee methodology, which holds that the W04 pallet, W02 pallet and W03 pallet are to be operated in the order mentioned in each of T0, T1 and K. Accordingly, processing for expanding a statement is such that if such a statement has been read into the CPU 2, processing for adding on a statement (and a new word) (or for decomposing and expanding a statement) is executed in such a manner that the statement will satisfy the cyclic structure (step 123). The results (command sequence table) of executing processing for expanding statements with regard to the statement of line 21 are shown in Fig. 37.

Statement expansion processing for the statement "MOVE TANKA OF SHIN-TBL (given: T1W02) TO TANKA OF GAMEN-R (self: T0W04)" on line 21 will be described while referring to the process route diagram shown in Fig. 29 and the command sequence table shown in Fig. 37.

The pallet to which the given word "TANKA OF SHIN-TBL" of the statement on line 21 belongs is a T1W02 pallet. One rule for assigning a word to a pallet in the Lyee methodology is that a word identical with a W02 pallet word is assigned also to a W02G sub-pallet. The new word "TANKA (OF SHIN-TBL)" is assigned to a T1W02G sub-pallet. A statement connecting the T1W02 pallet and the T1W02G sub-pallet is added [MOVE TANKA OF SHIN-TBL (T1W02) TO TANKA OF SHIN-TBL (T1W02G)].

One rule for assigning a word to a pallet in the Lyee methodology is that a word corresponding to a W02G sub-pallet word is assigned also to a W04P sub-pallet. A statement connecting the T1W02G sub-pallet and the T1W04P sub-pallet is added [MOVE TANKA OF SHIN-TBL (T1W02G) TO TANKA OF SHIN-TBL (T1W04P boundary)]. A word assigned in such case is referred to as a "boundary word".

Since the self word [TANKA OF GAMEN-F (T0W04)] of the statement on line 21 is a word of the base structure of the on-line process T0, it is necessary to move (duplicate) data from the base structure of the batch process T1 to the base structure of the on-line process T0. In this case, a new word that is the destination of duplication is provided in the W04P sub-pallet of the base structure of the on-line process T0 [TANKA OF GAMEN-R (T0W04P)]. The word assigned in such case is referred to as a boundary word. A statement connecting the W04P sub-pallet of batch process T1 and the W04P sub-pallet of on-line process T0 is added [MOVE TANKA OF SHIN-TBL (T1W04P boundary) TO TANKA OF GAMEN-R (T0W04P boundary)].

It is necessary to store a word, which is stored in a boundary word, in a W04P sub-pallet. A new word [TANKA OF GAMEN-R (T0W04P)] is provided in the W04P sub-pallet of on-line process T0. A statement connecting the boundary word and the newly generated word of the W04P sub-pallet is provided [MOVE TANKA OF GAMEN-R (T0W0P boundary) TO TANKA OF GAMEN-R (T0W04P)].

Finally, a statement connecting the word "TANKA OF GAMEN-R (T0W04P)" newly assigned to the T0W04P sub-pallet and the T0W04 pallet word "TANKA OF GAMEN-R (T0W04)" is added [MOVE TANKA OF GAMEN-R (T0W04P) TO TANKA OF GAMEN-R (T0W04)].

The line number for which statement expansion processing has been executed, the positioning (type) of the expanded statement in the Lyee program, the pallet (pallet function program) in which the statement is handled (location) and the statement after expansion are described in the command sequence table (Fig. 37). It goes without saying that the content of the command sequence table is stored in the memory (storage means) of the program reproducing apparatus 1. Of course, the command sequence table (the results of processing for expanding statements) may be described in the program description column of a Lyee belt (in such case the program description column of the Lyee belt would be updated further).

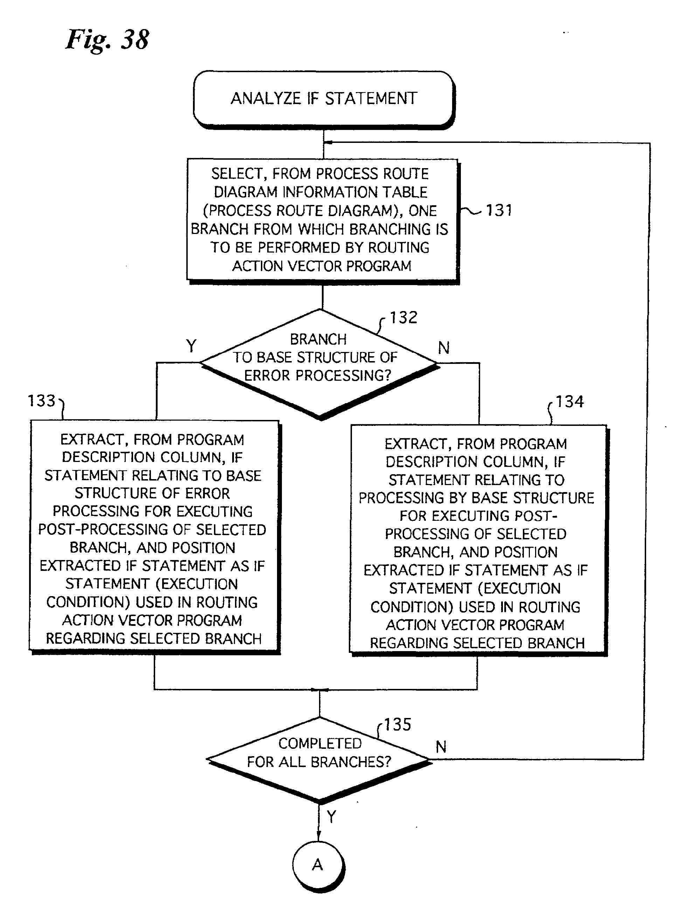

Next, processing for analyzing an IF statement is executed (step 93). Figs. 38 to 40 are flowcharts illustrating the details of processing for analyzing an IF statement. Processing for analyzing an IF statement utilizes a process route diagram information table (or a process route diagram). A computer can be made to execute analysis processing by utilizing information that has been stored in the process route diagram information table. An arrangement may be adopted in which a technician inputs the information to a computer based upon the process route diagram information table (process route diagram).

Processing for analyzing an IF statement is processing for discriminating the statement of an IF statement used in a conventional program and the positioning in a Lyee program. IF statements that appear in a conventional program are classified broadly into (1) an IF statement stipulating a route from one base structure to another base structure (or to quit processing), (2) an IF statement stipulating an input condition or an output condition, and (3) an IF statement for controlling an equivalent word (in a case where the same self word is being used in two or more statements, this self word is referred to as a "self word"). Whether an IF statement in a conventional program should be used in any vector program of a Lyee program is ascertained by processing for analyzing the IF statement (Figs. 38 to 40).

One branch point from which branching is to be performed by a routing action vector program is selected from the "ROUTING VECTOR ID" column of the process route diagram information table (Fig. 30) [or from the process route diagram (Fig. 29)] (step 131).

If the selected branch point is one that is directed to the base structure of error processing ("YES" at step 132), an IF statement related to processing of the base structure of error processing, which is processing that follows the selected branch, is extracted from the program description column of the Lyee belt. In other words, the IF statement extracted here is such a statement that processing for executing error processing is selected depending upon a prescribed condition.

The extracted IF statement is positioned as an execution condition used in a routing action vector program (see Figs. 7 and 14) of a pallet that is the origin of the selected branch point mentioned above (e.g., the pallet that is the origin of branch point A in the process route diagram of Fig. 29 is the T0W04P sub-pallet). The relationship between the extracted IF statement and the pallet in which this IF statement is to be used is stored temporarily in the internal memory 8 (step 133).

In the process route diagram shown in Fig. 29, the branch points A (at which the route is divided into four portions) include a branch point that leads to error processing. Lines 13 and 18 (see Fig. 35) are extracted as IF statements which control the base structure of error processing. (Since "99999" is ascertained as representing an error, the IF statement that controls the statement to which "99999" is related is extracted as the IF statement that controls the base structure of error processing.) From the description that follows "ELSE" after the IF statement of line 13, it is ascertained that this IF statement is a branch to error processing in processing related to a screen. [From the description that follows "ELSE" after the IF statement of line 18, it is ascertained that this IF statement is a branch to error processing in processing related to DB (database).] The IF statement of line 13 is positioned as an IF statement used in the routing action vector program in the T0W04P sub-pallet that is the origin of the branch point A. The IF statement of line 18 is positioned as an IF statement used in the routing action vector program in the T1W04P sub-pallet that is the origin of the branch point C.

In a case where the selected branch point is not one directed to the base structure of error processing (the branch point is one directed to the base structure of T0, T1 or K, which executes ordinary processing), an IF statement relating to processing of a base structure that executes the next processing of the selected branch point is extracted from the description of the conventional program and the extracted IF statement is positioned as a statement used in the routing action vector program of the pallet that is the origin of the selected branch point (step 134). For example, the branch point B in the process route diagram shown in Fig. 29 is one at which one route is directed to the base structure of quit processing. Line 09 of the program description is extracted as an IF statement used in the "DETERMINE EXECUTION CONDITIONS" part of the routing action vector program (Fig. 14) of the T0W02 pallet.

Next, from the process route diagram information table (process route diagram), one of the pallets for which there is the possibility that an input condition or output condition will be stipulated by an input vector program or output vector program is selected (step 141). In a case where data is read in from a database or screen only at the time of a prescribed condition, an input condition is stipulated. In a case where data is output to a database or screen at the time of a prescribed condition, an output condition is stipulated.

Whether there is an input condition or output condition is determined with regard to the selected pallet (step 142). If there is no such condition, control proceeds to selection of the next pallet ("NO" at step 142; steps 140, 141).

If there is an input condition or output condition, an IF statement which stipulates this input condition or output condition is extracted from the description of the program description column. If the pallet selected at step 141 is a W02 pallet, the IF statement representing this input condition is extracted and is positioned as an "EXECUTION CONDITION" of the input vector program of the selected W02 pallet. If the selected pallet is a W04 pallet, the IF statement representing this output condition is extracted and is positioned as an "EXECUTION CONDITION" of the output vector program of the selected W04 pallet (step 143). The conventional program (the program of the program description column shown in Fig. 35) illustrated in Fig. 21 does not have such an IF statement.

Finally, a MOVE statement or COMPUTE statement in which a self word is an equivalent word is retrieved from the program description column (step 151). If such a MOVE statement or COMPUTE statement is found, the IF statement that controls this statement is extracted. The extracted IF statement is used (step 152) in "ACCEPTANCE?" of the homogeneity vector program of the W04P sub-pallet to which a given word, which is used in order to store data in the equivalent word (self word) used in the MOVE statement, etc., belongs. This processing is executed with regard to all program statements that include equivalent words (step 153).

For example, with reference to the program description column of Fig. 35, "KINGAKU OF GAMEN-R (self: T0W04)" is being used as a self word on both lines 24 and 26. It is understood that the self word "KINGAKU OF GAMEN-R (self: T0W04)" is an equivalent word. The IF statement that controls the statement (MOVE) regarding this equivalent word is the IF statement on line 23. The IF statement of line 23 is positioned as the "ACCEPTANCE?" portion of the homogeneity vector program of the K-W04P sub-pallet to which "WK", which is a given word with respect to this equivalent word, belongs.

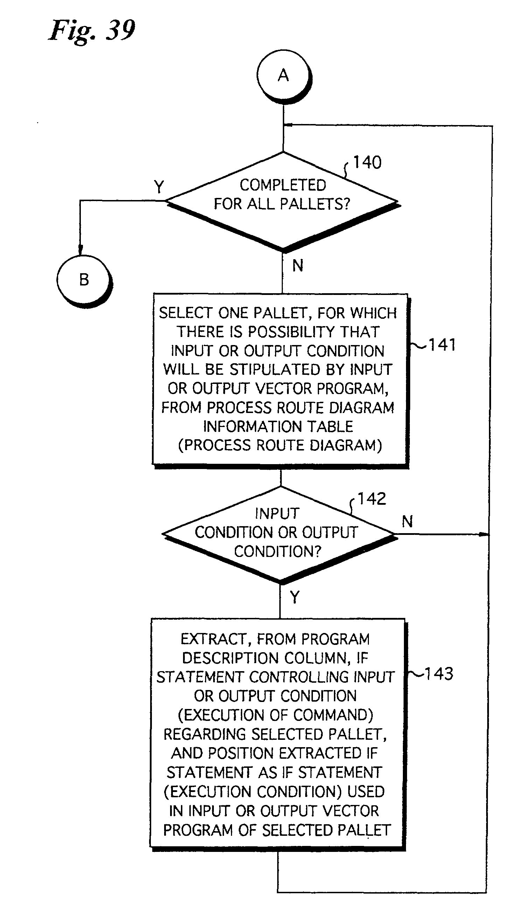

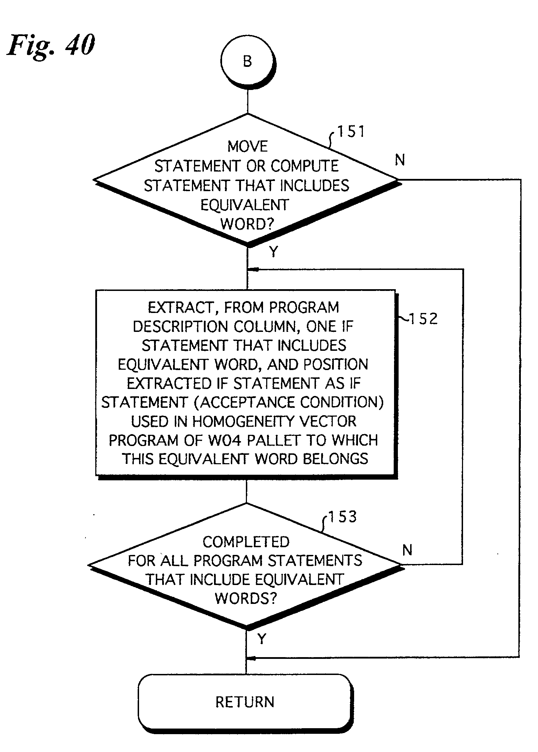

The processing for analyzing IF statements described above need not necessarily be executed in the above-described order. Processing (Fig. 40) for analyzing an IF statement regarding an equivalent word may be executed first, or processing (Fig. 39) for analyzing an IF statement of an input/output condition may be executed first.

If a command sequence table created by the processing (step 93) for expanding statements is completed and processing (step 94) for analyzing IF statements ends, control proceeds to processing (step 94) for making a conversion to Lyee ALL registration processing. This conversion processing is processing for converting information obtained by the series of processes up to the above-described processing for analyzing IF statements (information that has been stored in the process route diagram information table, secondary coordinates of words that appear in the conventional program, secondary coordinates of new words provided by statement expansion processing, and positioning of IF statements of the conventional program in the Lyee program, etc.) to the input data format of processing based upon a Lyee ALL processing program, described later. Since this is processing for changing the data format (data arrangement, etc.), a details description is omitted.

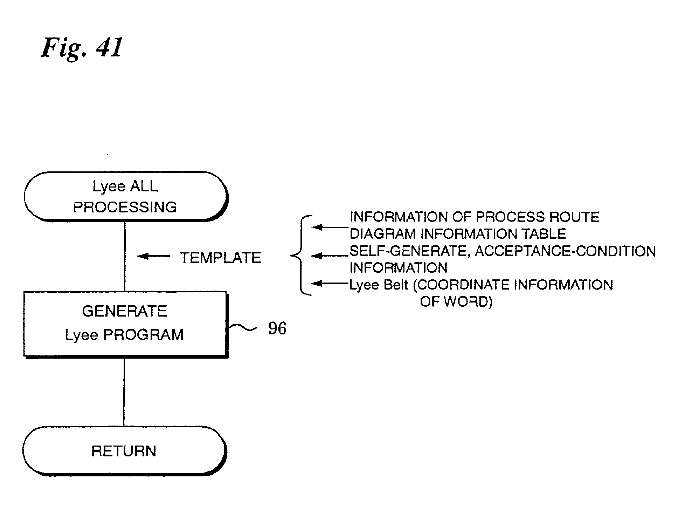

When changing of the data format (creation of Lyee ALL registration information) is completed, control proceeds to Lyee ALL processing (Fig. 19; step 53). Fig. 41 is a flowchart illustrating the specifics of Lyee ALL processing.

As described above, with a Lyee program, the general forms (templates) of tense control function programs, pallet function programs and vector programs having predetermined processing structures are prepared. Information and IF statements (acceptance condition information) of the process route diagram information table and statements that appear in the conventional program are substituted in the templates at prescribed positions ("ACCEPTANCE?", "SELF-GENERATE", "DETERMINE"). For example, a MOVE statement and a COMPUTE statement in the conventional program are substituted as self-generation information in "SELF-GENERATE" of a homogeneity vector program of the W04P sub-pallet in a base structure to which the self word of this statement belongs. A plurality of programs (the programs shown in Fig. 7) (Lyee programs) having a program structure in accordance with the Lyee methodology are completed while the processing functions accomplished by the conventional program are maintained (step 96).

Finally, processing for shaping a conventional program (Fig. 26, step 82) will be described taking a COBOL program as an example.

There are instances where a program created in COBOL includes a copy statement. This registers part of a source program (text) in a library beforehand and utilizes it upon copying it as is in another program. If a copy statement is being used, processing (copy-statement expansion processing) for expanding text specified by this copy statement is executed.

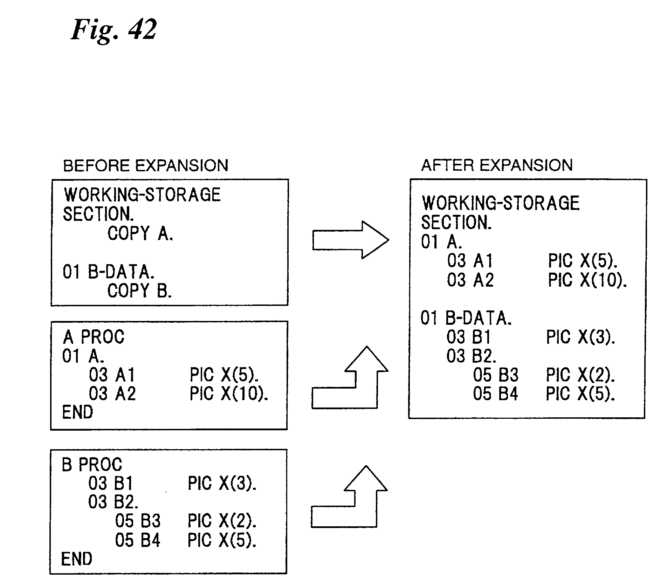

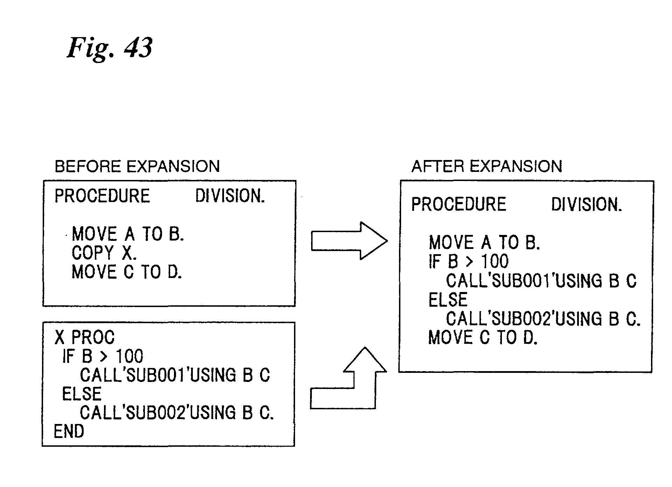

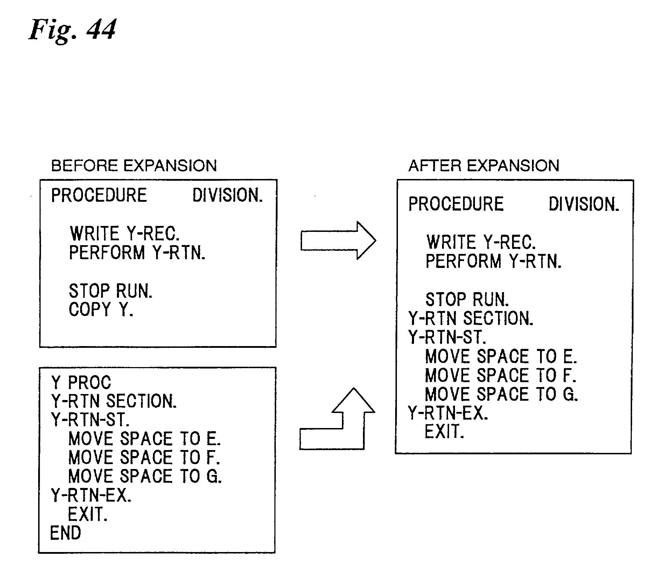

Fig. 42 illustrates copy-statement expansion processing in DATA DIVISION, and Figs. 43 and 44 illustrate copy-statement expansion processing in PROCEDURE DIVISION.

In a case where statements "COPY A." and "COPY B." are included in a program statement prior to expansion and a copy statement A [the portion (enclosed by the border) that follows A PROC] and a copy statement B (the portion that follows B PROC) are prepared separately, as shown in Fig. 42, the content of A PROC is expanded into the portion "COPY A." and the content of B PROC is expanded into the portion "COPY B.". The program description prior to expansion (the left side) is rewritten to the program description after expansion (the right side).

The same holds true for the example of expansion shown in Fig. 43. The content of X PROC is expanded in the portion "COPY X.". The same holds true for the example of expansion shown in Fig. 44. The content of Y PROC is expanded in the portion "COPY Y.".

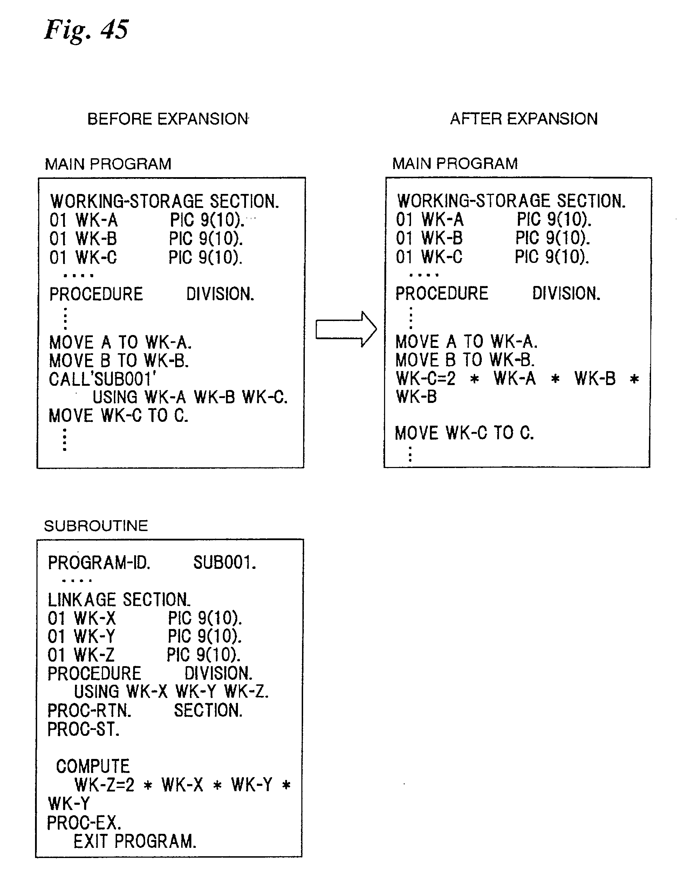

There are instances where a description that calls a subroutine (sub-program) is included in a conventional program (main program). If a subroutine is called by a main program and execution of the called subroutine ends, processing returns again to processing of the main program. In this case, a command (subroutine CALL) for calling the subroutine is included in the main program. Processing (subroutine expansion processing) for expanding (inserting) a statement of the subroutine into the main program instead of the subroutine CALL in the main program is executed. Fig. 45 illustrates subroutine expansion processing.

In a case where a CALL command (CALL 'SUB001' USING WK-A WK-B WK-C) for reading out a subroutine is included in a main program before expansion and a subroutine [program ID (PROGRAM-ID.) is subroutine "SUB001."] is prepared, as shown in Fig. 45, the content of the subroutine called by this CALL command is expanded (inserted) into the main program instead of the CALL command in the main program. [In the subroutine shown in Fig. 45, the portion ("WK-Z=2*WK-X*WK-Y*WK-Y") that follows the COMPUTE statement is a substantial portion of the subroutine and therefore only this portion is expanded into the main program.] In accordance with the description "USING WK-A WK-B WK-C" included in the CALL command, WK-X, WK-Y, WK-Z in the sub-program are replaced by WK-A, WK-B, WK-C, respectively, in the main program.

In a case where an unnecessary description (description of a program that is incapable of being executed) has been set forth in the conventional program, processing (cleaning processing) for deleting this description is executed. Thus a portion in the conventional program that cannot be executed is deleted.

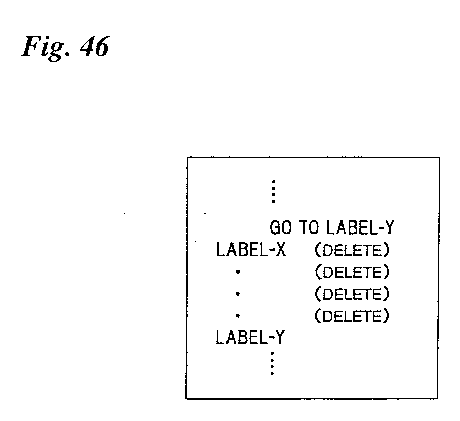

For example, in a case where the description (LABEL-X) of a jump destination by a jump command "GO TO" is in a conventional program but the description of the command (GO TO LABEL-X) for jumping to this jump destination is not present in the conventional program, as shown in Fig. 46, the description of LABEL-X is deleted by cleaning processing.

There are commands used in a conventional program that can be replaced by another command. For example, in COBOL, a statement using ADD, SUBTRACT, MULTIPLY and DIVIDE can all be replaced by a statement that uses COMPUTE. A statement that uses SET can be replaced using MOVE. In a case where a command used by a Lyee program finally created is decided in advance, the program is revised so as to use the decided command (this is referred to as "irregularity revision processing").

For example, in a case where the fact that "SET" is not used in a Lyee program finally created and the fact that "MOVE" is used in the program are decided in advance, the description "SET IDX TO 1" in the program can be replaced by "MOVE 1 TO IDX".

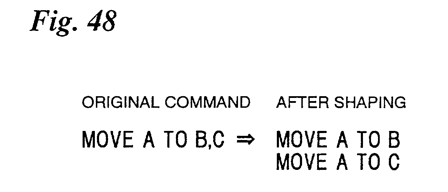

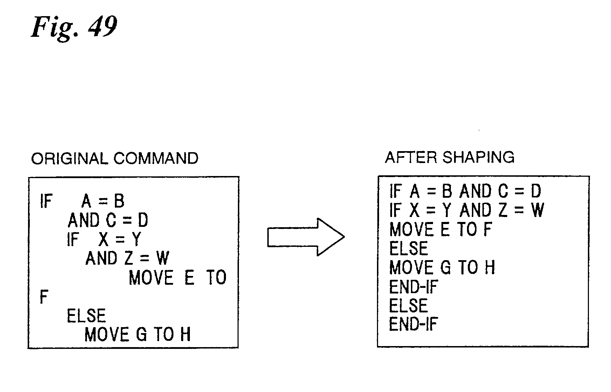

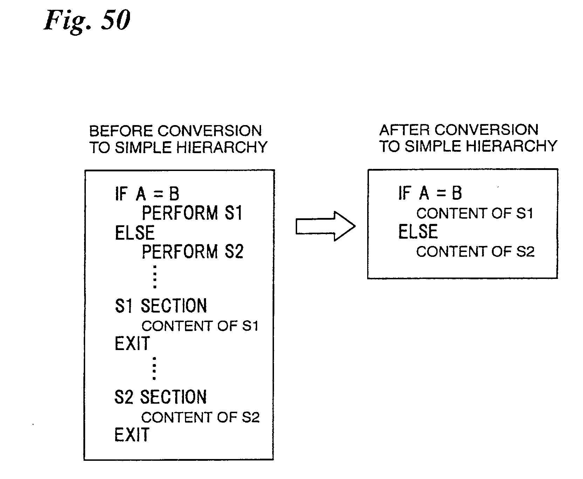

Shaping processing is executed. In shaping processing, the following processing is applied to a conventional program:
(a) Periods in the conventional program are deleted and spaces are provided. Further, in order to clarify the breaks between statements, an END statement (command) is appended to the end of each statement.
(b) A statement containing a plurality of words is decomposed. For example, a statement "MOVE A TO B, C" is decomposed into statements on two lines, namely "MOVE A TO B" and "MOVE A TO C", as shown in Fig. 48. In the IF condition portion, "END-IF", which means the end of the IF statement, is added, as illustrated in Fig. 49.
(c) Comment lines are deleted.
(d) Conversion to a simple hierarchy. In the case of COBOL, there are instances where a program has a multilevel hierarchical structure owing to use of a PERFORM statement or the like. This is converted to a simple hierarchical structure. For example, in a case where a PERFORM statement is being used in a conventional program, as shown in Fig. 50, the PERFORM command and an EXIT command corresponding thereto are deleted and the program portion called by the PERFORM statement is moved to the portion of the PERFORM command.

In the above-described processing for reproducing a program, a method through which a conventional program that has been created in COBOL language is reconstructed as a program (Lyee program) in accordance with the Lyee development method has been described throughout. However, an approach that is basically similar can be applied even with regard to a conventional program that has been created in another program language. That is, if a prescribed rule (agreement concerning a program description) exists also in a program (conventional program) created by another program language in the same way as a program created in the COBOL language and this prescribed rule can be ascertained, then it is possible to ascertain what words (data fields) are being used as well as to what input/output units (definitives) these words are related. By assigning words that appear in the conventional program and new words that are for satisfying the Lyee base structure (words which decide primary and secondary coordinates) to a pallet and creating templates [various programs (Fig. 7) using templates] in which these words and statements are incorporated, even a conventional program that has been created using another program language can be reconstructed as a Lyee program that is in accordance with the Lyee methodology.

## Claims

1. A program reproducing method of reproducing an existing program, which has been created by a method other than the Lyee development method, as a new program having a structure in accordance with the Lyee development method while maintaining functions accomplished by said existing program, comprising steps of:
extracting a word, which is being used in said existing program, from said program in a form in which a definitive to which this word is related is identified;
assigning the extracted word to one or a plurality of pallets in dependence upon the type of definitive to which the word is related; and
converting each statement or command of the existing program to a form in accordance with any of a plurality of program components having a structure in compliance with the Lyee development method in one or a plurality of pallets to which words contained in the statements or commands have been assigned.

2. A program reproducing method according to claim 1, wherein a statement or a command, from among statements or commands of an existing program, that is for generating data to be stored in a field represented by a word is converted to a form in accordance with a program component for data generation from among said plurality of program components.

3. A program reproducing method according to claim 1, further comprising the following steps with regard to a statement or command that includes two or more words among statements or words of an existing program:
determining whether a relationship between two or more pallets to which respective ones of two or more words being used in the statement or command is a relationship that satisfies a predetermined sequence;
in a case where the relationship between two or more pallets does not satisfy the predetermined sequence, decomposing the statement or command into a plurality of statements or commands and incorporating a new word in each statement or command obtained by decomposition; and
assigning new words to one or a plurality of pallets in such a manner that the relationship between two or more pallets, to which two or more words included in each of the statements or commands obtained by decomposition are assigned, will satisfy the predetermined sequence.

4. A program reproducing method according to claim 1, wherein an extracted word is a self word or given word.

5. A program reproducing method according to claim 1, further comprising a step of adopting a statement or command, which executes physical input/output processing with regard to a definitive, from among statements or commands of an existing program as part of a program component, which is for performing overall control of pallets, from among said plurality of program components.

6. A program reproducing method according to claim 1, wherein said pallet is any of a W04 pallet relating to output processing, a W02 pallet relating to input processing and a W03 pallet relating to data generation processing, further comprising steps of:
if an extracted word is related to a definitive used in input processing, assigning this word to at least the W02 pallet; and
if an extracted word is related to a definitive used in output processing, assigning this word to at least the W04 pallet.

7. A program reproducing method according to claim 6, wherein a set consisting of a W04 pallet, W02 pallet and W03 pallet is provided in accordance with the type of definitive to which a word being used in an existing program is related.

8. A program reproducing method according to claim 6, wherein if a word being used in said existing program is a word not related to a definitive, a set consisting of a W04 pallet, W02 pallet and W03 pallet for assigning this word is provided separately.

9. A program reproducing method according to claim 6, wherein if a description of error processing is included in said existing program, a set consisting of a W04 pallet, W02 pallet and W03 pallet for handling this error processing is provided separately.

10. A program reproducing method of reproducing an existing program, which has been created by a method other than the Lyee development method, as a new program having a structure in accordance with the Lyee development method while maintaining functions accomplished by said existing program, comprising steps of:
extracting a definitive, which is controlled by an existing program, from the existing program;
preparing, with regard to the extracted definitive, a plurality of program components for operating a base structure consisting of a set of W02, W04 and W03 pallets;
extracting words, which are being used in said existing program, from said existing program in a form in which the definitive to which the words belong and input/output categories of the words are identified;
assigning the words to one or a plurality of the pallets among the W02, W04 and W03 pallets, with regard to the definitive to which the words belong, in dependence upon the definitive to which the extracted words belong and the input/output categories of the words; and
converting a statement or command that contains a word of the existing program to a form in accordance with any of a plurality of program components having a structure in compliance with the Lyee development method in a pallet related to the statement or command through the word.

11. A program reproducing method according to claim 10, further comprising steps of:
if an extracted word belongs to a definitive used in input processing, assigning this word to at least the W02 pallet; and
if an extracted word is related to a definitive used in output processing, assigning this word to at least the W04 pallet.

12. A program reproducing method according to claim 10, wherein if an extracted word is a word that does not belong to any extracted definitive, a plurality of program components which operate a base structure for assigning this word are prepared separately.

13. A program reproducing method according to claim 10, wherein if a description of error processing is included in said existing program, a plurality of program components which operate a base structure for handling this error processing are prepared separately.

14. A program reproducing method according to claim 10, wherein a statement or a command, from among statements or commands of an existing program, that is for generating data to be stored in a field represented by a word is converted to a form in accordance with a program component for data generation from among said plurality of program components.

15. A program reproducing method according to claim 10, further comprising the following steps with regard to a statement or command that includes two or more words among statements or words of an existing program:
determining whether a relationship between two or more pallets to which respective ones of two or more words being used in the statement or command is a relationship that satisfies a predetermined sequence;
in a case where the relationship between two or more pallets does not satisfy the predetermined sequence, decomposing the statement or command into a plurality of statements or command and incorporating a new word in each statement or command obtained by decomposition; and
assigning new words to one or a plurality of pallets among the W04, W02 and W03 pallets in such a manner that the relationship between two or more pallets, to which two or more words included in each of the statements or commands obtained by decomposition have been assigned, will satisfy the predetermined sequence.

16. A program reproducing method according to claim 10, further comprising a step of adopting a statement or command, which executes physical input/output processing with regard to a definitive, from among statements or commands of an existing program as part of a program component, which is for performing overall control of pallets, from among said plurality of program components.

17. A program reproducing method according to claim 10, further comprising a step of creating a process route diagram, which represents the flow of processing of said existing program, from said existing program by one base structure or by a combination of a plurality of base structures.

18. A program reproducing method according to claim 17, further comprising steps of:
if a route connected to two or more different base structures or a route connected to quit processing is expressed in said process route diagram, extracting, from said existing program, a conditional statement or conditional command representing a branch condition at a branch point of the route; and
converting the extracted conditional statement or conditional command to a form in compliance with a program component, which is for route determination, from among a plurality of program components of a pallet from which said branch point originates.

19. A program reproducing method according to claim 10, further comprising steps of:
searching for a conditional statement or conditional command representing a data input condition or a data output condition based upon the description of an existing program; and
if a conditional statement or conditional command representing a data input condition or a data output condition has been extracted, converting the extracted conditional statement or conditional command to a form that is in accordance with a program component for input or output operation from among a plurality of program components in a pallet in which the data input condition or data output condition acts.

20. A program reproducing method according to claim 10, further comprising steps of:
searching for a conditional statement or conditional command representing a decision condition of an equivalent word based upon the description of an existing program; and
if a conditional statement or conditional command representing a decision condition of an equivalent word has been extracted, converting the extracted conditional statement or conditional command to a form that is in accordance with a program component from among a plurality of program components in a pallet to which the equivalent word has been assigned.

21. A program reproducing apparatus comprising:
first storage means for storing a plurality of program components which construct a Lyee program;
second storage means for storing tense control function information, base structure information, pallet information, definitive information, route information and command information obtained from a process route diagram created based upon an existing program;
third storage means for storing an existing program applied thereto;
first assignment means for assigning a word, which is being used in the existing program that has been stored in the third storage means, to one or a plurality of pallets among a W04 pallet, W02 pallet and W03 pallet, which are included in a base structure to which the word is related, based upon the tense control function information, base structure information, pallet information and definitive information that has been stored in said second storage means; and
conversion means which, on the basis of the route information and command information that has been stored in said second storage means, is for converting each statement or command of the existing program that has been stored in the third storage means to a form in accordance with any of the plurality of program components, which have been stored in said first storage means, in the one or plurality of pallets to which a word included in the statement or command has been assigned.

22. A program reproducing apparatus according to claim 21, further comprising statement or command read-in means for reading in a statement or command of an existing program.

23. A program reproducing apparatus according to claim 22, wherein if a word being used in a statement or command read in by said read-in means is related to a definitive used in input processing, said first assignment means assigns this word to at least the W02 pallet; and
if a word being used in a statement or command that has been read in is related to a definitive used in output processing, said first assignment means assigns this word to at least the W04 pallet.

24. A program reproducing apparatus according to claim 22, further comprising:
determination means for determining of the statement or command that has been read in by said read-in means, with regard to a statement or command including two or more words, whether a relationship between two or more pallets to which respective ones of two or more words being used in the statement or command is a relationship that satisfies a predetermined sequence;
means, responsive to a determination by said determination means that the relationship between two or more pallets does not satisfy the predetermined sequence, for decomposing the statement or command into a plurality of statements or commands and incorporating a new word in each statement or command obtained by decomposition; and
second assignment means for assigning new words to one or a plurality of pallets in such a manner that the relationship between two or more pallets, to which two or more words included in each of the statements or commands obtained by decomposition are assigned, will satisfy the predetermined sequence.

25. A program reproducing apparatus according to claim 22, further comprising self-word/given-word identifying means for identifying whether a word being used in a statement or command that has been read in by said read-in means is a self word or a given word.

26. A program reproducing apparatus according to claim 21, wherein a program component for data generation has been stored in said first storage means; and
said conversion means converts a statement or a command, from among statements or commands of an existing program, that is for generating data to be stored in a field represented by a word to a form in accordance with said program component for data generation from among said plurality of program components.

27. A program reproducing apparatus according to claim 21, wherein a program component, which is for performing overall control of a set of W04, W02 and W03 pallets, has been stored in said first storage means; and
said conversion means adopts a statement or command, which executes input/output processing with regard to a screen, from among statements or commands of an existing program as part of a program component, which is for performing overall control of said W04, W02 and W03 pallets, from among said plurality of program components.

28. A program reproducing apparatus according to claim 21, wherein a program component for route determination has been stored in said first storage means, said apparatus further comprising:
route-branch-condition-command extraction means for extracting, from said conventional program on the basis of route information that has been stored in said second storage means, a conditional statement or conditional command representing a branch condition of the route;
said conversion means converting the extracted conditional statement or conditional command to a form in compliance with a program component, which is for route determination, from among a plurality of program components of a pallet from which branching of said route originates.

29. A program reproducing apparatus according to claim 21, wherein program components for an input operation and for an output operation have been stored in said first storage means;
said apparatus further comprises data-input/output-condition-command searching means for searching for a conditional statement or conditional command representing a data input condition or a data output condition based upon the description of an existing program; and
in a case where a conditional statement or conditional command representing a data input condition or a data output condition has been extracted, said conversion means converts the extracted conditional statement or conditional command to a form that is in accordance with said program component for input or output operation from among a plurality of program components in a pallet in which the data input condition or data output condition acts.

30. A program reproducing apparatus according to claim 21, wherein a program component for data generation has been stored in said first storage means;
said apparatus further comprises equivalent-word-decision-condition-command searching means for searching for a conditional statement or conditional command representing a decision condition of an equivalent word based upon the description of an existing program; and
in a case where a conditional statement or conditional command representing a decision condition of an equivalent word has been extracted, said conversion means converts this conditional statement or conditional command to a form that is in accordance with a program component from among a plurality of program components in a pallet to which the equivalent word has been assigned.

31. A recording medium on which has been recorded an assignment program for controlling a program reproducing apparatus for reproducing an existing program, which has been created by a method other than the Lyee development method, as a new program having a pallet structure in accordance with the Lyee development method while maintaining functions accomplished by said existing program, said assignment program:
discriminating a type of definitive, to which a word being used by a statement or command of said existing program belongs, based upon tense control function information, base structure information, pallet information and definitive information obtained from said existing program;
discriminating a type of pallet, to which said word is to be assigned, based upon a read statement or command regarding said word for which the type of definitive to which the word belongs has been discriminated; and
controlling said program reproducing apparatus in such a manner that said word is assigned to one or a plurality of pallets in dependence upon the type of definitive and type of pallet discriminated.

32. A medium according to claim 31, said medium having recorded thereon an assignment program for:
discriminating whether a word being used in said statement or command is a self word or a given word based upon the type of statement or command in which said word is being used; and
in a case where the word being used in a statement or command is determined as being a self word or given word, controlling said program reproducing apparatus in such a manner that the word being used in said statement or command is furnished with an identifier indicating that the word is a self word or indicating that the word is a given word.

33. A recording medium on which has been recorded a conversion program for controlling a program reproducing apparatus having a storage unit storing a plurality of program components constructing a Lyee program, said program reproducing apparatus reproducing an existing program, which has been created by a method other than the Lyee development method, as a new program having a pallet structure in accordance with the Lyee development method while maintaining functions accomplished by said existing program;
said existing program being such that information relating to one or a plurality of pallets to which a word is to be assigned is furnished with regard to a word being used in a statement or command of said existing program;
said conversion program controlling the program reproducing apparatus in such a manner that a statement or command of said existing program is converted to a form in accordance with any of a plurality of program components in a pallet specified by information relating to an assigned pallet appended to a word included in the statement or command.

34. A recording medium according to claim 33, wherein a program component for data generation is included in said plurality of program components; and
said conversion program converts a statement or command for generating data to be stored in a field represented by a word to a form in accordance with a program component for data generation among said plurality of program components.

35. A recording medium according to claim 33, wherein said plurality of program components include a program component for performing overall control of a set of a plurality of pallets; and
said conversion program adopts a statement or command, which executes input/output processing with regard to a screen, as part of a program component, which is for performing overall control of a set of a plurality of pallets, from among said plurality of program components.

36. A recording medium according to claim 33, wherein said plurality of program components include a program component for a route decision; and
said conversion program:
extracts a conditional statement or conditional command, which represents a branch condition of the route, from said existing program on the basis of route information obtained from said existing program; and
converts the extracted conditional statement or conditional command to a form in compliance with a program component, which is for route determination, from among a plurality of program components of a pallet from which branching of said route originates.

37. A recording medium according to claim 33, wherein said plurality of program components include program components for an input operation and for an output operation; and
said conversion program:
searches the existing program for a conditional statement or conditional command representing a data input condition or a data output condition; and
if a conditional statement or conditional command representing a data input condition or a data output condition has been extracted, converts the extracted conditional statement or conditional command to a form that is in accordance with said program component for input or output operation from among a plurality of program components in a pallet in which the data input condition or data output condition acts.

38. A recording medium according to claim 33, wherein said plurality of program components include a program component for data generation; and
said conversion program:
searches the existing program for a conditional statement or conditional command representing a decision condition of an equivalent word; and
if a conditional statement or conditional command representing a decision condition of an equivalent word has been extracted, converts this conditional statement or conditional command to a form that is in accordance with a program component from among a plurality of program components in a pallet to which the equivalent word has been assigned.

39. A program reproducing apparatus for reproducing an existing program, which has been created by a method other than the Lyee development method, as a new program having a structure in accordance with the Lyee development method while maintaining functions accomplished by said existing program, comprising:
storage means for storing a plurality of program components which construct a Lyee program;
input means for inputting an existing program;
definitive extraction means for extracting a definitive from the existing program that has been input;
word/definitive relationship extraction means for extracting a relationship between a word and a definitive from the existing program that has been input;
input/output category extraction means for extracting an input/output category of a word that has been extracted by said word extraction means for the existing program that has been input;
assignment means for assigning a word that has been extracted by said word extraction means to one or a plurality of pallets to which the word is related based upon the relationship between the word and definitive extracted by said word/definitive relationship extraction means and the word input/output category extracted by said input/output category extraction means; and
conversion means for converting each statement or command of the existing program to a form in accordance with any of a plurality of program components, which have been stored in said storage means, in one or a plurality of pallets to which words contained in the statements or commands have been assigned.
